# EUROPEAN PATENT APPLICATION

(11) **EP 4 776 385 A1**
(43) Date of publication of application: **15.07.2026**
(21) Application number: 26151681.9
(22) Date of filing: 13.01.2026
(51) Int. Cl.: H01M 10/613, H01M 10/615, H01M 10/63, H01M 10/6556, H01M 10/6568

(54) **ENHANCED ENERGY STORAGE FOR EQUIPMENT**

(30) Priority: 14.01.2025 US 202563745005 P
(71) Applicant: Carrier Corporation, Palm Beach Gardens, FL 33418 (US)
(72) Inventor: WANG, Ligong, East Syracuse, 13057 (US); AGIRMAN, Ismail, Palm Beach Gardens, 33418 (US)
(74) Representative: Dehns

(57) **Abstract**

According to embodiments, an energy storage device, ESD, holder (310, 310A) includes a main body (310B), one or more ESD openings (310F) in the main body (310B), and one or more vacancy regions (310G) in the main body (310B). Each of the one or more vacancy regions (310G) is operable to hold a fluid. A first ESD opening of the one or more ESD openings (310G) is operable to prevent the fluid from contacting an ESD (320) within the first ESD opening.

## Description

### BACKGROUND

The embodiments described herein relate to control systems that manage high-density energy storage device (ESD) systems for high-energy-consumption equipment such as heating, ventilation and air conditioning (HVAC) systems.

Electrical energy drives a myriad of devices and equipment in commercial, industrial, and residential applications. For example, electrical energy drives lights, motors, household appliances, medical equipment, computers, air conditioning systems, electric vehicle charging stations and many other electrical devices. In most areas, power utilities generate and distribute electricity through an alternating current (AC) power grid. Shortages and/or increased costs associated with fossil fuels and electricity from power utilities significantly impact consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy. For example, a hurricane or an earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons. During these times of lost power, the sites may be unable to continue operations.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, and residential applications typically draw power from the power grid during times of peak demand, despite the higher costs associated with its generation.

Equipment that utilizes electrical energy can include components (e.g., electronic controllers) that employ techniques to manage various aspects of the equipment's energy consumption, including, for example, operational efficiency, environmental considerations, power-grid regulatory compliance, energy costs, and the like. One technique for managing energy consumption is providing the equipment with local energy storage and local energy storage control systems that can selectively reduce the equipment's reliance on power-grid energy. High-density ESDs (e.g., lithium-ion batteries) are an efficient choice as the local energy storage for many high-energy-consumption applications, including, for example, building and residential HVAC systems. However, there are challenges associated with implementing local energy storage as high-density ESDs such as lithium-ion batteries due to their chemistry and behavior under certain conditions.

### SUMMARY

According to a first aspect of the invention, an energy storage device (ESD) holder includes a main body, one or more ESD openings in the main body, and one or more vacancy regions in the main body. Each of the one or more vacancy regions is operable to hold a fluid. A first ESD opening of the one or more ESD openings is operable to prevent the fluid from contacting an ESD within the first ESD opening.

Optionally, further embodiments can include the first ESD opening including a thermal interface that is operable to contact the fluid.

In Optionally, further embodiments can include the thermal interface being further operable to contact a surface of the ESD within the first ESD opening.

Optionally, further embodiments can include the thermal interface being further operable to provide a pathway structure for heat exchange between the fluid and the ESD within the first ESD opening.

Optionally, further embodiments can include the heat exchange being operable to pass heat to the fluid from the ESD within the first ESD opening.

Optionally, further embodiments can include the heat exchange being operable to pass heat from the fluid to the ESD within the first ESD opening.

Optionally, further embodiments can include the thermal interface configured to include a flexible region having a size operable to adjust and contact the surface of the ESD within the first ESD opening responsive to an insertion of the ESD within the first ESD opening

Optionally, further embodiments can include an inlet operable to pass the fluid into the one or more vacancy regions in the main body.

Optionally, further embodiments can include an outlet operable to pass the fluid out of the one or more vacancy regions in the main body.

Optionally, further embodiments can include the inlet port being coupled to an ESD pump, the outlet port being coupled to the ESD pump, the ESD pump operable to control the flow of the fluid into the one or more vacancy regions in the main body, and the ESD pump further operable to control the flow of the fluid out of the one or more vacancy regions in the main body.

According to a second aspect of the invention, a method of forming an ESD holder includes forming a main body, forming one or more ESD openings in the main body, and forming one or more vacancy regions in the main body. Each of the one or more vacancy regions is operable to hold a fluid. A first ESD opening of the one or more ESD openings is operable to prevent the fluid from contacting an ESD within the first ESD opening.

Optionally, further embodiments can include the first ESD opening operable to include a thermal interface that is operable to contact the fluid. The thermal interface is further operable to contact a surface of the ESD within the first ESD opening. The thermal interface is further operable to provide a pathway structure for heat exchange between the fluid and the ESD within the first ESD opening.

Optionally, further embodiments can include a first operating mode of the ESD holder and a second operating mode of the ESD holder. In the first operating mode of the ESD holder, the heat exchange is operable to include passing heat to the fluid from the ESD within the first ESD opening. In the second operating mode of the ESD holder, the heat exchange is operable to include passing heat from the fluid to the ESD within the first ESD opening. The thermal interface includes a flexible region having a size operable to adjust and contact the surface of the ESD within the first ESD opening responsive to an insertion of the ESD within the first ESD opening.

Optionally, further embodiments can include forming an inlet operable to pass the fluid into the one or more vacancy regions in the main body, along with forming an outlet operable to pass the fluid out of the one or more vacancy regions in the main body.

Optionally, further embodiments can include the inlet port being coupled to an ESD pump. The outlet port is coupled to the ESD pump. The ESD pump controls the flow of the fluid into the one or more vacancy regions in the main body. The ESD pump further controls the flow of the fluid out of the one or more vacancy regions in the main body.

According to a third aspect of the invention, an ESD system includes an ESD holder that includes a main body, one or more ESD openings in the main body, one or more vacancy regions in the main body, an inlet port coupled to an ESD pump, and an outlet port coupled to the ESD pump. Each of the one or more vacancy regions is operable to hold a fluid. A first ESD opening of the one or more ESD openings includes a thermal interface that is operable to contact the fluid and a surface of an ESD within the first ESD opening. The thermal interface is further operable to provide a pathway structure for heat exchange between the fluid and the ESD within the first ESD opening. The ESD pump is operable to pass or flow the fluid into, through, and out of the one or more vacancy regions in the main body. An ESD management system (ESD-MS) is coupled to the ESD within the first ESD opening. The ESD-MS is operable to make a determination that a status of the ESD within the first ESD opening is out-of-range. The ESD-MS is further operable to, responsive to the determination that the status of the ESD within the first ESD opening is out-of-range, control operations of the ESD pump.

Optionally, further embodiments may include the ESD pump being coupled to a source of the fluid. The source of the fluid includes a first set of valves operable to route cooling fluid operable to, while the source of the fluid is operating in a first mode, remove heat from the ESD within the first ESD opening. The source of the fluid further includes a second set of valves operable to route heating fluid operable to, while the source of the fluid is operating in a second mode, remove cold from the ESD within the first ESD opening. The status includes an ESD operation and an ESD temperature. Controlling operations of the ESD pump includes selecting fluid flow parameters of the fluid based at least in part on the ESD operation and the ESD temperature. Controlling operations of the ESD pump further includes applying the fluid flow parameters to the fluid.

Optionally, further embodiments may include the ESD-MS operable to include a rule-based algorithm. The rule-based algorithm is operable to select the fluid flow parameters of the fluid based at least in part on the ESD operation and the ESD temperature.

Optionally, further embodiments may include the ESD-MS operable to include a cognitive algorithm. The cognitive algorithm is operable to select the fluid flow parameters of the fluid based at least in part on the ESD operation and the ESD temperature.

Optionally, further embodiments may include the ESD system including a primary cooling-heating (cooling/heating) loop and a secondary cooling/heating loop. The primary cooling/heating loop is operable to circulate cooling/heating refrigerant through the primary cooling/heating loop. The secondary cooling/heating loop includes the ESD holder. The secondary cooling/heating loop is operable to circulate the fluid through the secondary cooling/heating loop.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present invention is illustrated by way of example and not limited in the accompanying figures in which like reference numerals indicate similar elements.
FIG. 1 depicts a non-limiting example of a system.
FIG. 2 depicts a non-limiting example implementation of a controller of the system shown in FIG. 1.
FIG. 3A depicts an ESD system with thermal management functionality.
FIG. 3B depicts aspects of a battery cell holder of an ESD system with thermal management functionality.
FIG. 3C depicts a side, cross-sectional view of the battery cell holder shown in FIG. 3B.
FIG. 3D depicts a top-down, cross-sectional view of the battery cell holder shown in FIG. 3B.
FIG. 3E depicts another top-down, cross-sectional view of the battery cell holder shown in FIG. 3B.
FIG. 3F depicts aspects of a battery cell holder of an ESD system with thermal management functionality.
FIG. 3G depicts aspects of a battery cell holder of an ESD system with thermal management functionality.
FIG. 4A depicts a flow diagram illustrating a thermal management method.
FIG. 4B depicts a sensor system, a battery management system (BMS), and an ESD pump with thermal management functionality.
FIG. 5 depicts an integrated ESD system with thermal management functionality.
FIG. 6 depicts a flow diagram illustrating a thermal management method.
FIG. 7 depicts an outdoor unit (ODU) having an ESD system with thermal management functionality.
FIG. 8 depicts a computer system that can be utilized to implement embodiments of the disclosure.

### DETAILED DESCRIPTION

Embodiments described herein relate to high-energy-consumption equipment such as an HVAC system that includes an energy storage device (ESD) system. In one or more embodiments, the ESD system is operable to manage states and/or conditions of the ESD (e.g., batteries, supercapacitors, and the like) of the ESD system in order to selectively assist with powering relatively large high-energy-consumption equipment, including but not limited to HVAC systems. A "state" of a battery identifies what the battery is doing or capable of at a specific moment (e.g., charge level or power output). A "condition" of a battery identifies the battery's long-term performance, health, and physical integrity (e.g., how much capacity it has lost over time). Herein, the state and/or condition of a battery is referred to as the state/condition or "status" of a battery. In one or more embodiments, the state/condition (i.e., status) of the ESD is evaluated to determine whether not the state/condition is "within-range" or "out-of-range." For a state/condition that is within-range, no ESD management action is initiated. For a state/condition that is out-of-range, an ESD management action is selected and initiated.

In one or more embodiments, the state/condition includes an operation performed by the ESD (e.g., a charge or discharge operation) and an associated temperature of the ESD, and the ESD management action is a fluid-based thermal management technique in which a cooling or heating fluid is passed through vacancies in an ESD holder that holds the ESD. In some embodiments, the cooling or heating fluid can include a non-flammable-high-flash-point coolant. Non-limiting examples of suitable non-flammable-high-flash-point coolants include perfluorocarbons, silicone-based fluids, and specially formulated synthetic oils. The ESD holder includes one or more ESD openings operable to each hold an ESD. At least one of the ESD openings includes a thermal interface operable to contact the fluid and an ESD in the ESD opening. The thermal interface provides a path for heat exchange between the fluid and the ESD. In some embodiments, the thermal interface includes a flexible interface that substantially defines the ESD opening. The flexible interface includes a size operable to adjust and contact an exterior surface of the ESD responsive to an insertion of the ESD within the ESD opening. The ESD holder, the ESD opening, and the thermal interface enable heat exchange between the ESD and the fluid without the ESD contacting the fluid. Additionally, the size of the ESD holder, the number of ESD openings, and the volume of the vacancies in the ESD holder are selected such that a relatively large volume of fluid is available for exchanging heat with the ESD in the ESD opening. The relatively large volume of fluid in the vacancies increases the speed of heat exchange between the fluid the thermal interface and the ESD within the ESD opening because of the relatively large capacity of the fluid for absorbing or providing heat.

The thermal interface brings the ESD temperature within-range (e.g., through the thermal interface passing heat or cold into the fluid). In one or more embodiments, an ESD pump is coupled to a source of the fluid, and an ESD management system (ESD-MS) is operable to control the ESD pump and/or the source of fluid to pass or flow the fluid into and through the vacancies in the ESD holder. The source of fluid can be configured to include controllable valves operable to provide cold fluid in warm ESD conditions (e.g., from about 30°C to about 60°C) and provide warm fluid in cold ESD conditions (e.g., from about -40°C to about 15°C). The ESD, the ESD pump, and the source of fluid form an ESD cooling/heating loop.

In embodiments, the ESD-MS is configured to include an analyzer, and the ESD-MS and the analyzer are configured to evaluate ESD state/condition information (e.g., information related to an ESD discharge/charge operation; and ESD temperature information during the ESD discharge/charge operation) and efficiently and effectively control the flow fluid through the ESD holder in a manner that matches or is tailored to the specifics of the ESD state/condition (i.e., the "out-of-range" state/condition). For example, in one or more embodiments, the analyzer detects or predicts from the ESD state/condition information that the ESD is about to experience a thermal runaway condition during a charge/discharge, and the ESD-MS and the analyzer control the flow of fluid through the ESD holder in a manner that matches or is tailored to the specifics of the detected or predicted thermal runaway condition during an ESD charge/discharge. For example, the charge/discharge of an ESD can depend on the ESD chemistry (e.g., lithium-ion, nickel-metal hydride, lead-acid), the ESD charge/discharge rate, ESD load characteristics, ESD cycling history, and the like. The ESD-MS and the analyzer control the flow of fluid through the ESD holder to provide thermal management that matches or is tailored to the specifics of the detected or predicted ESD charge/discharge rate, ESD load characteristics, ESD cycling history, and the like. In some embodiments, the ESD-MS and the analyzer further take into account the volume of fluid in the ESD holder in controlling the flow of fluid through the ESD holder.

In some embodiments, the ESD can be implemented as high-energy-density batteries (e.g., lithium-ion batteries) used in high-power-consumption applications (e.g., HVAC systems) where battery safety, efficiency, and longevity are emphasized.

In some embodiments, the source of the fluid can be separate from the system the ESD is configured to power. In some embodiments, the source of the fluid can be integrated with the system the ESD is configured to power. For example, where the system the ESD is configured to power is an HVAC system, the source of the fluid can be a heat exchanger configured and arranged to perform dual fluid cooling/heating loop operations, which include a primary heat exchanger section and a secondary heat exchanger section. The primary heat exchanger section is operable to perform cooling/heating of the circulating fluid of the HVAC system (also referred to herein as a primary cooling/heating loop). The secondary heat exchanger section is operable to perform cooling/heating of the circulating fluid in the ESD cooling/heating loop (also referred to herein as the secondary cooling/heating loop). In one or more embodiments, the primary heat exchanger section can be configured to include a first set of controllable valves (e.g., electronic expansion valves) operable to provide cold circulating HVAC system fluid in warm conditions and provide warm circulating HVAC system fluid in cold conditions. In one or more embodiments, the secondary heat exchanger section can be configured to include a second set of controllable valves (e.g., electronic expansion valves) operable to provide cooling fluid in warm ESD conditions (e.g., from about 30°C to about 60°C) and warm fluid in cold ESD conditions (e.g., from about -40°C to about 15°C).

In some embodiments, the HVAC cooling/heating loop is controlled by a primary pump and a variable frequency device (VFD). The VFD is configured to detect load changes placed on the HVAC system and selectively activate the ESD pump where it is determined (e.g., by the ESD-MS) that the load change is related to the state/condition (e.g., temperature) of the ESD. The ESD cooling/heating loop and the HVAC cooling/heating loop provide a dual cooling/heating loop architecture that can provide a first type of fluid inside (e.g., non-flammable-high-flash-point coolants) the ESD holder while providing a second type of fluid (e.g., a highly energy-conversion-efficient and cost-effective liquid) in the HVAC cooling/heating loop of the HVAC system.

Turning now to a more detailed description, with current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to an air conditioning system that includes electrical energy storage systems (e.g., batteries, supercapacitors, and the like) to provide the air conditioning system with a level of dispatchability needed to interconnect with the electrical power grid.

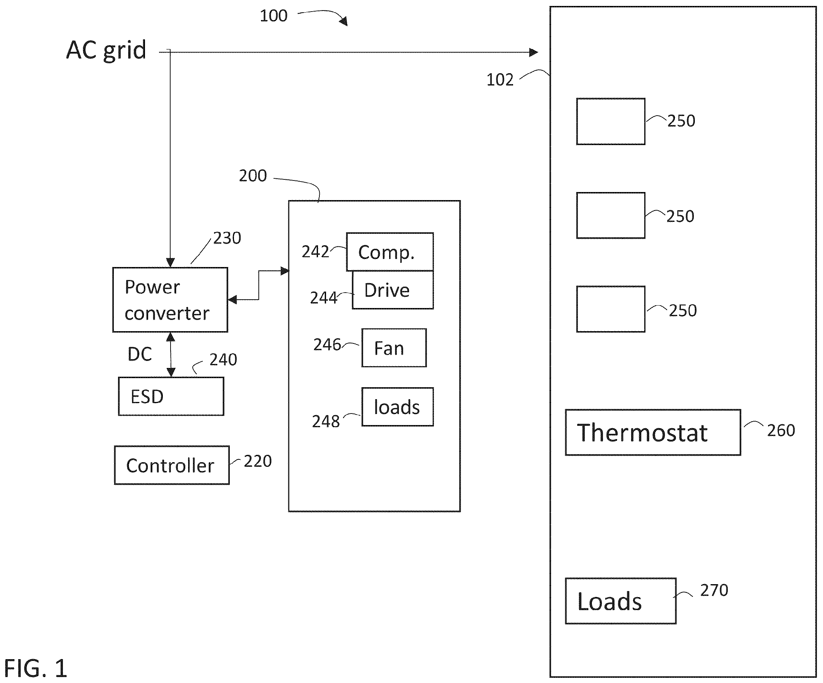

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an ESD 240. FIG. 1 is an example embodiment, and the location of components is not limited to that shown in FIG. 1. For example, the power converter 230, ESD 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, ESD 240 and controller 220 may be located in the first unit 200. One or more of the power converter 230, ESD 240 and controller 220 may be located adjacent to or outside the first unit 200. One or more of the power converter 230, ESD 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor.

The controller 220 may communicate with an air conditioning controller system controller and/or an ESD controller (e.g., a battery system management (BMS) system). In some embodiments, a single controller may implement all the functions of the controller 220, air conditioning controller and ESD controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid, powered solely by the ESD 240, and powered by both the AC power grid and the ESD 240, in conjunction. The one or more components of the air conditioning system include components in the first unit 200 and/or components in the second unit 250.

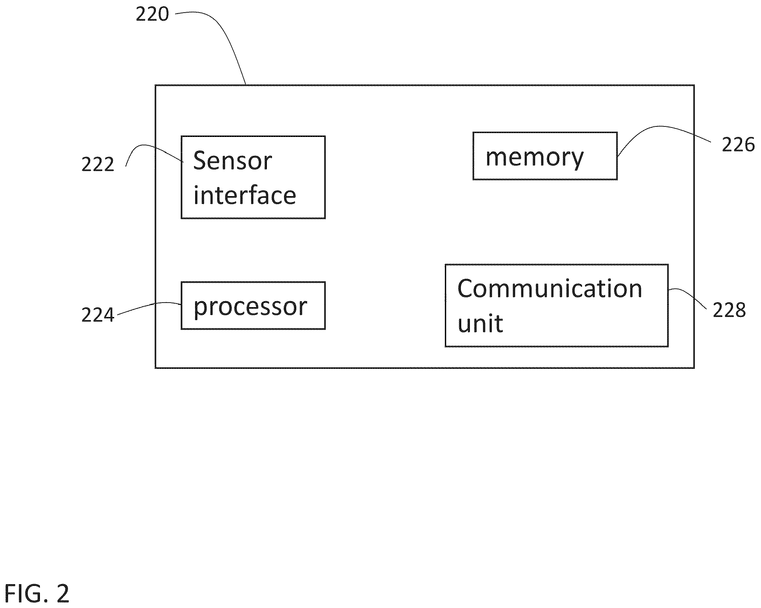

FIG. 2 depicts the controller 220 in accordance with one or more embodiments. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a computer readable storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring again to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230.

The ESD 240 is configured to provide, under certain circumstances, at least a portion of the power to operate one or more of components of the air conditioning system, such as the first unit 200, the second unit(s) 250, along with the indoor load(s) 270, and any other loads. The ESD 240 may be implemented using apparatus for storing electrical energy including one or more of, for example, a battery, battery cell holders, battery cells, supercapacitor, etc. The battery implementation of the ESD 240 may include several cells in either modular form or as a stand-alone, multi-cell array. The battery implementation of the ESD 240 may be made of a single or multiple packaged self-contained systems, battery modules, battery cell holders, or individual cells. The battery implementation of the ESD 240, such as a complete plug and play battery, may include a box, wires, cells, and modules. For example, the battery implementation of the ESD 240 may include a group of cells configured into a self-contained mechanical and electrical unit. The ESD 240 may include other components (e.g., an ESD management system (ESD-MS)) that are electrically coupled to the ESD 240 and may be adapted to communicate directly or through the ESD-MS to controller 220. In battery implementations of the ESD 240, the ESD-MS can be referred to as a battery management system (BMS).

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler(s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

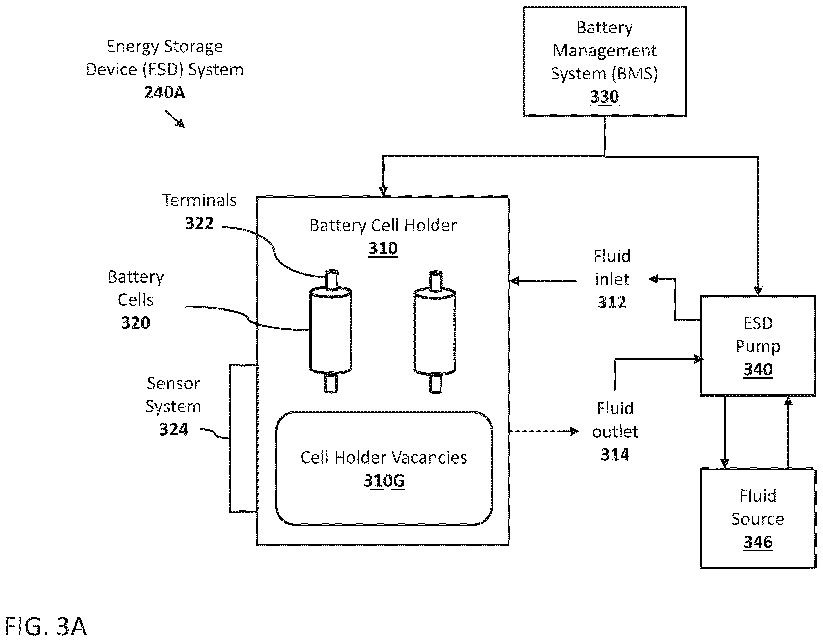

FIG. 3A depicts a non-limiting example of how the ESD 240 (shown in FIG. 1) can be implemented as an ESD system 240A. In some embodiments, the ESD system 240A includes one or more instances of a battery cell holder 310. In some embodiments, the ESD system 240A includes one or more instances of the battery cell holder 310 and a BMS 330, configured and arranged as shown. In some embodiments, the ESD system 240A includes one or more instances of the battery cell holder 310, the BMS 330, and an ESD pump 340, configured and arranged as shown. The battery cell holder 310 includes a sensor system 324, one or more cell holder vacancies 310G, and one or more battery cells 320 having terminals 322. The terminals 322 of the battery cell 320 are the connection points (or ends) that allows electrical current to flow in and out of the battery cell 320. The battery terminals 322, often labeled as the positive (+) and negative (-) terminals, connect the battery cell 320 to an external circuit (e.g., one or more component of the system 100 shown in FIG. 1), thereby enabling the battery cell 320 to supply power to a device or be recharged.

The sensor system 324 is operable to sense various operating states or conditions of the system 100 (shown in FIG. 1), including the battery cell holder 310 and its contents. The sensor system 324 is configured and arranged to detect specific physical phenomena throughout the system 100 (shown in FIG. 1) and convert the detected physical phenomenon into machine readable data or information, often for measurement or monitoring purposes. The machine-readable data or information is designed to be understood by machines, thereby enabling efficient data exchange, storage, analysis and interpretation by computers or automated systems (e.g., the BMS 330) without requiring human intervention. The sensor system 324 generally includes a network of sensors, each of which includes a sensing element and a transducer. The sensing element is operable to detect the specific physical phenomenon (e.g., temperature, pressure, motion, flow rate, chemical composition, and the like) and generate therefrom an interim signal. The transducer is operable to convert the interim signal to the machine-readable data or information, which is machine-readable sensor output.

The machine-readable data or information can be raw machine-readable data or information that require signal processing to improve its quality or usability. Such signal processing can include amplification to boost the signal strength for better readability; filtering to remove noise or irrelevant frequencies from the signal; and linearization that adjusts the signal to ensure that it corresponds linearly to the measured phenomenon. The machine-readable sensor output can be transmitted to a control unit, microcontroller, or data acquisition system (e.g., the BMS 330 shown in FIG. 3A and/or the controller 220 shown in FIGS. 1 and 2), where it can be further processed, displayed, or used to trigger actions. In some instances, the above-described functionality of the transducer can be incorporated into the control unit, microcontroller, or data acquisition system. In some instances, the above-described functionality of the control unit, microcontroller, or data acquisition system can be incorporated within the sensor to form a "smart" sensor. The network of sensors that form the sensor system 324 can be distributed at suitable locations throughout the monitored regions of the system 100 (shown in FIG. 1), including specifically the battery cell holder 310 (shown in FIG. 3A).

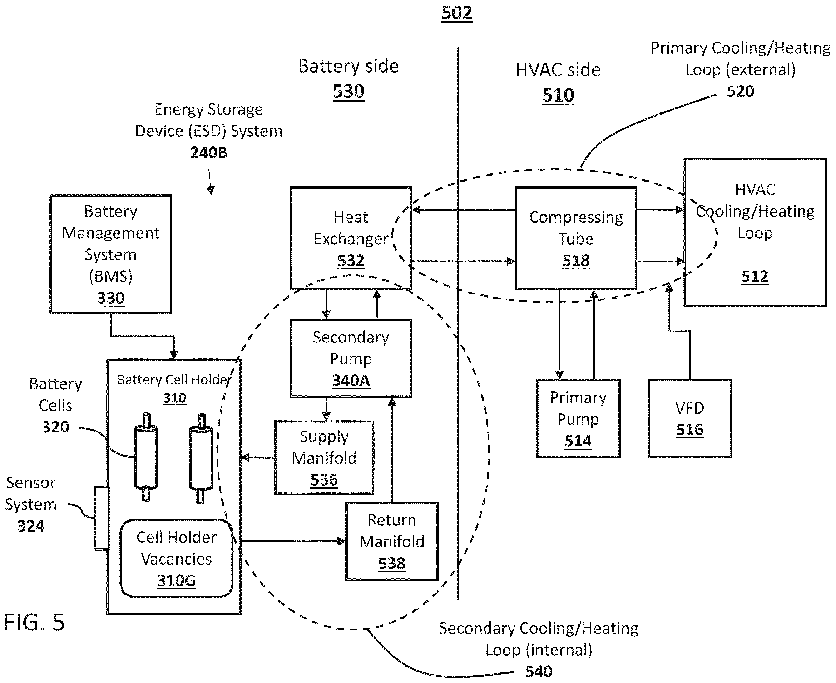

The BMS 330 is electronically coupled to the battery cells 320, the sensor system 324, the battery cell holder 310 and the ESD pump 340. The ESD pump 340 is separate from a primary pump (e.g., primary pump 514 shown in FIG. 5) of high-energy-consumption equipment (e.g., the system 100 shown in FIG. 1) to which the ESD system 240A provides power. In some embodiments, the ESD pump 340 is configured to include filter functionality operable to filter contaminants from cooling/heating fluid flowing through the ESD pump 340. As described in greater detail subsequently herein, the ESD pump 340 and the battery cell holder 310 are controlled (e.g., using the BMS 330) to improve the efficiency and effectiveness of fluid-based thermal management functionality applied to and implemented by the battery cell holder(s) 310.

The BMS 330 is configured to perform multiple conventional battery cell control operations, including various aspects of charging and discharging the battery cells 320; battery cell voltage monitoring; battery cell current monitoring; battery cell overvoltage control; battery cell undervoltage control; battery cell state-of-charge (SOC) estimation; battery cell thermal management; and the like. The BMS 330 can be formed from many functional blocks including cutoff field effect transistors (FETs), a fuel gauge monitor, a cell voltage monitor, cell voltage balance, real time clock (RTC), temperature monitors, and a state machine. In some embodiments, the BMS 330 can be provided as an integrated circuit (IC). The grouping of the functional blocks in an IC-version of the BMS 330 varies widely from a simple analog front end that offers balancing and monitoring and requires a microcontroller (MCU), to a standalone, highly integrated BMS 330 that runs autonomously.

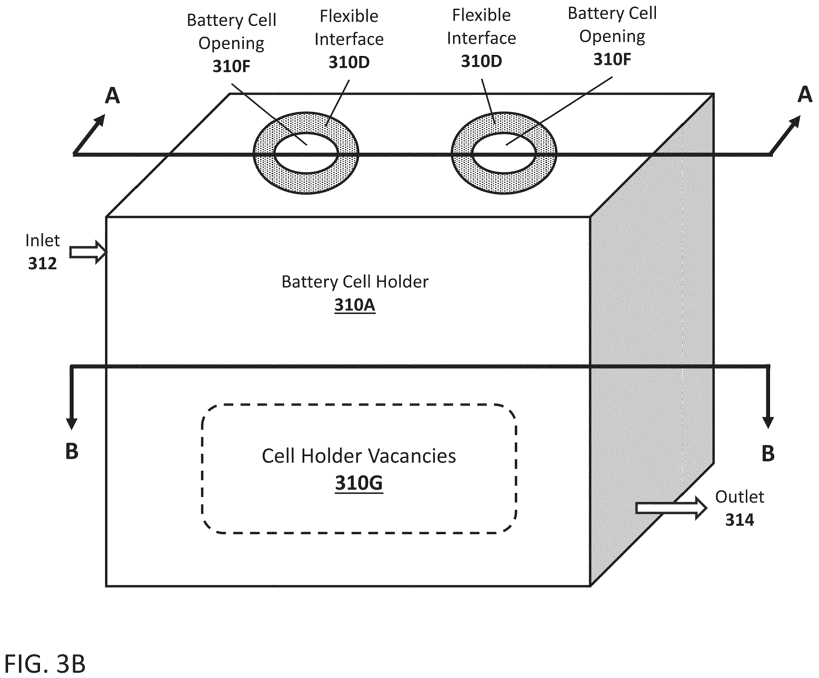

Each battery cell holder 310 includes one or more battery cell openings (e.g., battery cell opening 310F shown in FIG. 3B) operable to hold one or more battery cells 320. In some embodiments, each individual battery cell 320 can be implemented as a configuration of electrochemical cells. An electrochemical cell is a device that converts chemical energy into electrical energy (or vice versa) through redox (reduction-oxidation) reactions. Electrochemical cells are the building blocks of batteries and are widely used in applications ranging from small electronics to large power grids. Electrochemical cells can include two electrodes (e.g., an anode and a cathode), an electrolyte, and optionally a separator. In some embodiments, one or more of the battery cells 320 can be implemented as a high-density battery (e.g., a lithium-ion battery) used in high-energy-consumption applications (e.g., the system 100 shown in FIG. 1) where battery safety, efficiency, and longevity are emphasized.

The battery cell holder 310incorporates thermal management functionality in connection with the various battery cell operations controlled by the BMS 330. Battery cells 320, and particularly high-density batteries (e.g., lithium-ion batteries), generate heat during battery cell operations such as charging, discharging, and rapid cycling. Without proper cooling, excessive heat can build up within the battery cells 320 and lead to thermal runaway, where temperatures escalate uncontrollably. Excess heat can impact battery cell efficiency and reduce battery cell power output. In high-energy-consumption applications (e.g., the system 100 shown in FIG. 1), the battery cells 320 can discharge rapidly, thereby generating significant heat. Thermal management functionality helps maintain an optimal temperature range to ensure consistent battery performance in connection with the various battery cell operations controlled by the BMS 330. In embodiments where the battery cells 320 are lithium-ion battery cells, the battery cells 320 will operate over a wide temperature range (e.g., from about -40 degrees Celsius to about 60 degrees Celsius). However, to avoid performance degradation, the thermal management functionality can be used to maintain the battery cells 320 within a narrower temperature range (e.g., from about 15 degrees Celsius to about 35 degrees Celsius). For example, a lithium-ion battery cell operating at about 25 degree Celsius should expect about 6000 charge/discharge cycles of life. However, that same lithium-ion battery cell operating at about -20 degree Celsius should expect about 3000 charge/discharge cycles of life.

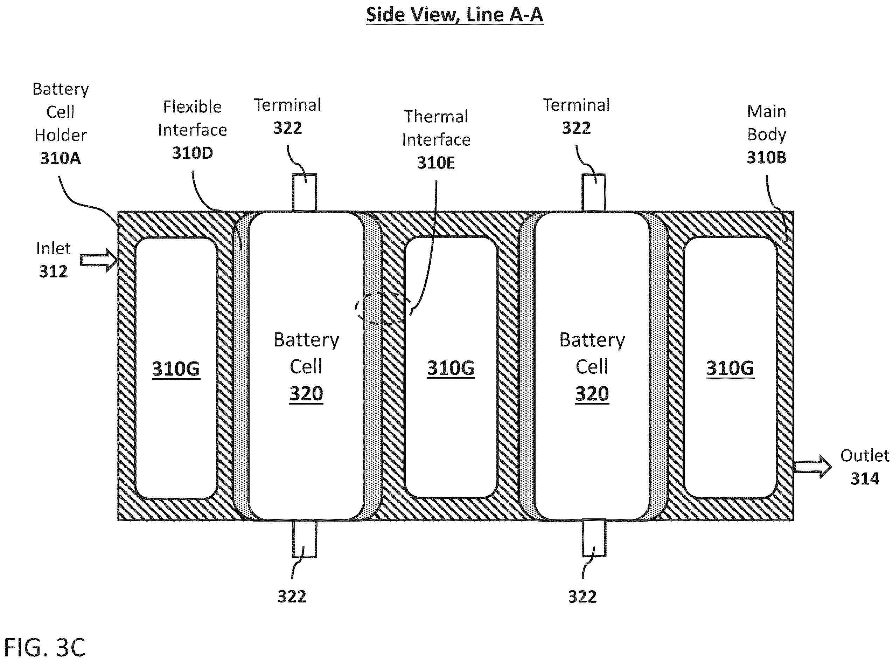

The battery cell holder 310 is operable to implement a fluid-based thermal management technique in which a cooling or heating fluid is passed through the cell holder vacancies 310G in the battery cell holder 310. The battery cell holder 310 includes one or more battery cell openings (e.g., battery cell openings 310F shown in FIG. 3B) operable to each hold a battery cell 320. The battery cell openings each includes a thermal interface (e.g., thermal interface 310E shown in FIG. 3C) operable to contact the fluid and a battery cell 320 positioned within one of the battery cell openings. The thermal interface is formed from material(s) having sufficient thermal conductivity designed to provide a path for efficiently transferring heat between the fluid that contacts one surface of the thermal interface and the battery cell 320 positioned within a battery cell opening and contacting another surface of the thermal interface.

In some embodiments, the thermal interface includes a flexible interface (e.g., flexible interface 310D shown in FIGS. 3B and 3C) configured and arranged to substantially define sidewall regions of the battery cell opening. In some embodiments, the flexible interface includes a size and a material flexibility that are operable to adjust and contact an exterior surface of the battery cell 320 responsive to an insertion of the battery cell 320 within the battery cell opening. The battery cell opening and the thermal interface enable heat exchange between the battery cell 320 and the fluid moving through the cell holder vacancies 310G without the battery cell 320 contacting the fluid. Additionally, the size of the battery cell holder 310, the number of battery cell openings, and the volume of fluid held by the cell holder vacancies 310G are selected such that a relatively large volume of fluid is available for exchanging heat between the fluid and the battery cell 320 through the thermal interface. The relatively large volume of fluid in the cell holder vacancies 310G, as well as the thermal conductivity of the thermal interface material(s), enable a predetermined and relatively high rate of heat exchange to be set or selected between the fluid, the thermal interface and the battery cell 320 within the battery cell opening.

The thermal management functionality of the battery cell holder 310 can be implemented as a fluid-based cooling/heating system augmented by the ESD pump 340 under control of the BMS 330. The ESD pump 340 is controlled in a manner that improves the efficiency and effectiveness of the fluid-based cooling/heating system by controlling flow parameters (e.g., flow rate, temperature, pressure, and the like) of the fluid moving through the cell holder vacancies 310G of the fluid-based cooling/heating system. The disclosed fluid-based cooling/heating system is useful for high-density implementations of the battery cells 320 (e.g., lithium-ion batteries) used to power high-energy consumption applications (e.g., the system 100 shown in FIG. 1) where battery safety, efficiency, and longevity are emphasized.

The battery cell holder 310 includes a fluid inlet 312 and a fluid outlet 314 operable to enable the fluid to enter, flow through, and exit the cell holder vacancies 310G of the battery cell holder 310. The ESD pump 340 is coupled to a fluid source 346, which is a source of the fluid. In some embodiments, the fluid source 346 can be configured to include a first set of controllable valves (e.g., electronic expansion valves) operable to provide cooling fluid in warm conditions of the battery cell 320 (e.g., from about 30°C to about 60°C) and provide heating fluid in cold conditions of the battery cell 320 (e.g., from about -40°C to about 15°C). In some embodiments, the fluid source 346 can be implemented as a cooling/heating plate operable to function as a type of heat exchanger that draws heat from fluid to generate cooling fluid, or draws cold from fluid to generate heating fluid.

The ESD pump 340 is operable to, under control of the BMS 330, selectively pump the fluid to and/or from the cell holder vacancies 310G of the battery cell holder 310 to control one or more flow parameters of the fluid that flows through the cell holder vacancies 310G. The flow parameters (e.g., flow rate, temperature, fluid pressure, and the like) are controlled in a manner that mitigates or otherwise addresses a state or condition of each battery cell 320 detected by the BMS 330 using the sensor system 324. For example, if the BMS 330 and the sensor system 324 detect a pattern of temperature rise in one or more of the battery cells 320 during a battery cell discharge that suggests or predicts the beginning of a thermal runaway condition, the BMS 330 can select flow parameters of the fluid moving through the cell holder vacancies 310G of the battery cell holder 310 that provide a rate of heat removal from the battery cells 320 that is matched to the battery cell discharge and the predicted thermal runaway condition to more efficiently and effectively counter, mitigate or otherwise negate the predicted thermal runaway condition.

The flow parameters of the fluid controlled by the ESD pump 340 and the BMS 330 include flow rate, pressure, temperature distribution, density, and the like. With respect to flow rate, the ESD pump 340 and the BMS 330 can control the flow rate, or the volume of the fluid that moves through the cell holder vacancies 310G of the battery cell holder 310 per unit time. Higher flow rates increase heat transfer capacity, thereby improving cooling or heating performance, while lower flow rates can slow heat transfer, thereby affecting the ability of fluid in the cell holder vacancies 310G of the battery cell holder 310 to maintain desired temperatures. Optimal flow rate helps maintain uniform temperatures and prevents the fluid from remaining too long or moving too quickly through the fluid source 346, thereby ensuring balanced performance.

With respect to pressure, the ESD pump 340 and the BMS 330 can select (increase/decrease) the pressure of the fluid as the ESD pump 340 pushes the fluid through the cell holder vacancies 310G of the battery cell holder 310. Increased pressure can enhance the fluid's ability to circulate through the cell holder vacancies 310G of the battery cell holder 310, especially over longer distances or with significant vertical lift. Proper pressure helps ensure that the fluid flows consistently through each portion of the cell holder vacancies 310G of the battery cell holder 310.

With respect to temperature distribution, by adjusting flow rate and pressure, the ESD pump 340 and the BMS 330 affect how the fluid distributes heat or cold throughout the cell holder vacancies 310G of the battery cell holder 310. Higher flow rates can prevent temperature imbalances in the fluid source 346, thereby ensuring even temperature distribution and avoiding hot or cold spots in the cell holder vacancies 310G of the battery cell holder 310.

With respect to density, although density is mainly influenced by temperature, the ESD pump 340 and the BMS 330 can affect the fluid's liquid density indirectly by controlling flow rate and thereby the time the fluid spends in different temperature zones of the cell holder vacancies 310G of the battery cell holder 310. By maintaining an optimal flow rate and pressure, the ESD pump 340 and the BMS 330 can help ensure that density of the fluid remains within an ideal range for effective heat absorption and release to address the detected state/condition of the battery cell 320.

FIG. 3B depicts a non-limiting example of how the battery cell holder 310 (shown in FIG. 3A) can be implemented as battery cell holder 310A. The battery cell holder 310A includes the cell holder vacancies 310G positioned within the battery cell holder 310A. The battery cell holder 310A further includes the fluid inlet 312 and the fluid outlet 314, configured and arranged as shown. The battery cell holder 310A further includes two instances of battery cell openings 310F. Two instance of the battery cell openings 310F are shown for ease of illustration and explanation. However, embodiments can include any number of battery cell openings 310F in the battery cell holder 310A. Sidewalls of each battery cell opening 310F are substantially defined by the flexible interface 310D. A size of the flexible interface 310D and a size of the battery cell 320 are such that, inserting the battery cell 320 into the battery cell opening 310F causes the flexible interface 310D to contact and/or grip an exterior surface of the battery cell 320. The material of the flexible interface 310D is selected to provide a desired level of thermal conductivity for transferring heat or cold to or from fluid in the cell holder vacancies 310G. Thermal conductivity (denoted as k or λ) is a material property that describes how efficiently heat can be transferred through a material. It quantifies the ability of a substance to conduct heat from a hotter area to a cooler area. The higher the thermal conductivity, the better the material can conduct heat.

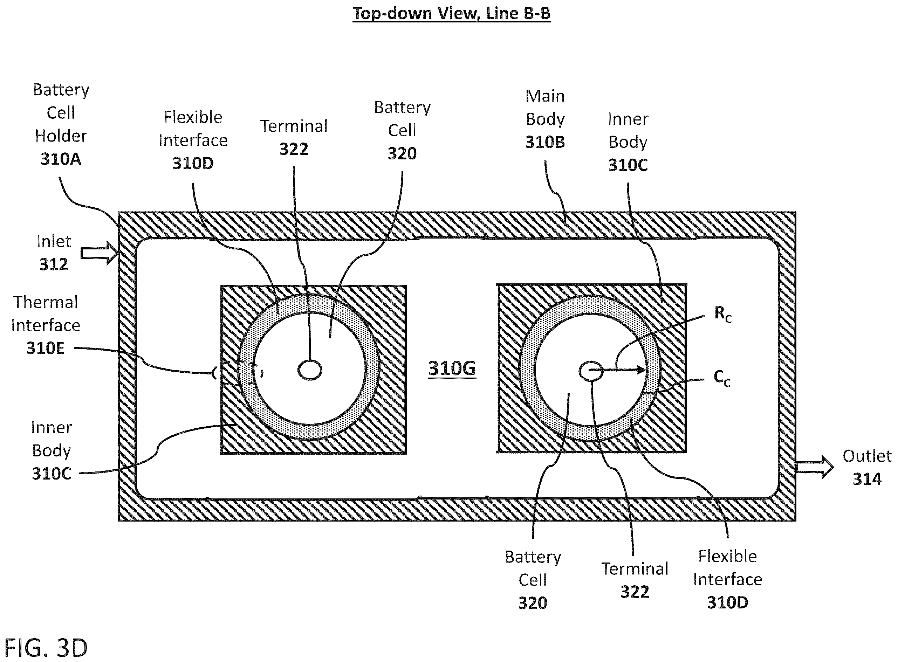

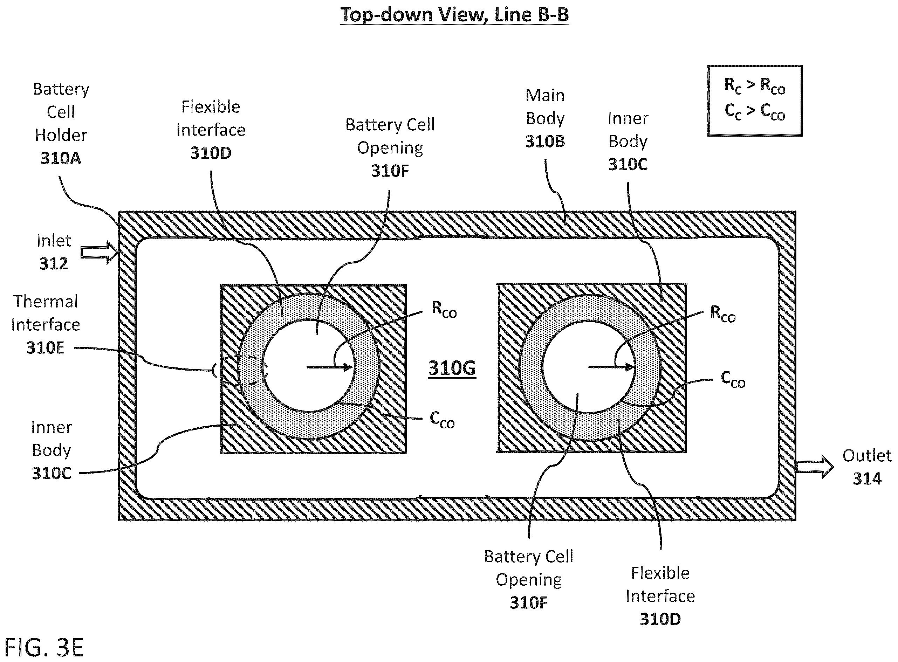

FIGS. 3C, 3D, and 3E depict cross-sectional views that provide additional details of the battery cell holder 310A shown in FIG. 3B. More specifically, FIG. 3C depicts a side, cross-sectional view of the battery cell holder 310A, taken along Line A-A shown in FIG. 3B. In FIG. 3C, the battery cells 320 are positioned within the battery cell openings 310F (shown in FIG. 3B) of the battery cell holder 310A. FIG. 3D depicts a top-down, cross-sectional view of the battery cell holder 310A, taken along Line B-B shown in FIG. 3B. In FIG. 3D, the battery cells 320 are positioned within the battery cell openings 310F (shown in FIG. 3B) of the battery cell holder 310A. FIG. 3E depicts another top-down, cross-sectional view of the battery cell holder 310A, taken along Line B-B shown in FIG. 3B. In FIG. 3E, the battery cells 320 are not positioned within the battery cell openings 310F of the battery cell holder 310A.

As best shown in FIGS. 3C and 3D, the battery cell holder 310A includes a main body 310B and inner body regions 310C. The main body 310B and the inner body regions 310C define the cell holder vacancies 310G. The volume of the cell holder vacancies 310G determine the volumes of fluid that can be flowed through the battery cell holder 310A.

As best shown in FIGS. 3C and 3D, the thermal interface 310E includes an instance of the inner body region 310C and an instance of the flexible interface 310D. The thermal interface 310E is operable to contact the fluid flowing through the cell holder vacancies 310G, and also contact the battery cell 320 positioned within a battery cell openings. The thermal interface 310E provides a path for heat exchange between the fluid and the battery cell 320 positioned within a battery cell opening 310F. In some embodiments, the flexible interface 310D is configured and arranged to substantially define sidewall regions of the battery cell opening 310F. The flexible interface 310D includes a size and a material flexibility that are operable to adjust and contact an exterior surface of the battery cell 320 responsive to an insertion of the battery cell 320 within the battery cell opening 310F. The battery cell opening 310F and the thermal interface 310E enable heat exchange between the battery cell 320 and the fluid moving through the cell holder vacancies 310G without the battery cell 320 contacting the fluid. Additionally, the size of the battery cell holder 310, the number and size of the battery cell openings 310F, and the volume of fluid held by the cell holder vacancies 310G are selected such that a relatively large volume of fluid is available for exchanging heat between the fluid and the battery cell 320 through the thermal interface 310E. The relatively large volume of fluid in the cell holder vacancies 310G enables a predetermined and relatively high rate of heat exchange to be set or selected between the fluid, the thermal interface 310E and the battery cell 320 within the battery cell opening 310F because of the relatively large capacity of the fluid for absorbing or providing heat. The material of the flexible interface 310D is selected to provide a desired level of thermal conductivity for transferring heat or cold to or from fluid in the cell holder vacancies 310G. Thermal conductivity (denoted as k or λ) is a material property that describes how efficiently heat can be transferred through a material. It quantifies the ability of a substance to conduct heat from a hotter area to a cooler area. The higher the thermal conductivity, the better the material can conduct heat. In some embodiments, the inner body regions 310C can be omitted from the battery cell holder 310A and the thermal interface 310E.

In embodiments, the thermal interface 310E is formed from one or more layers of material having thermal conductivity characteristics operable to efficiently transfer heat between the battery cell 320 and the fluid moving through in the cell holder vacancies 310G. Thermal conductivity is a material property that quantifies the ability of a substance to conduct heat. Thermal conductivity can be measured in the units W/m·K, which represent watts per meter-kelvin. In some embodiments, the inner body 310C of the thermal interface 310E is formed from material(s) having thermal conductivity from about 0.8 to 2.0 W/m·K. In some embodiments, the flexible interface 310D of the thermal interface 310E is formed from material(s) having thermal conductivity from about 0.10 to 1.60 W/m·K.

In some embodiments, the flexible interface 310D of the thermal interface 310E can be implemented as fluid-filled expandable element (e.g., a balloon-type element). In some embodiments, the expandable element can be formed from thermally conductive materials(s), including, for example, flexible films formed from graphene aerogels, metallic foams, and carbon nanotube films/foams. In some embodiments, the fluid that fills the expandable element can include liquid metals, water, ethylene glycol and water mixtures, and the like.

In some embodiments, a mechanism is provided for selectively increasing (i.e., inflating) and decreasing (e.g., deflating) the volume of fluid in the expandable element, thereby selectively increasing and decreasing the size the battery cell opening 310F. In some embodiments, the volume of fluid in the expandable element can be decreased sufficiently to enable the battery cell 320 to enter the battery cell opening 310F. After the battery cell. 320 is in place within the battery cell opening 310F, the volume of fluid in the expandable element can be increased sufficiently to bring the flexible interface 310D into contact with the battery cell 320, thereby securing the battery cell 320 in place within the battery cell opening 310F. Continuing to increase the volume of fluid in the expandable element continues to increase the contact points between the expandable element and the battery cell 320, thereby increasing the thermal conductivity between the flexible interface 310D and the battery cell 320. In some embodiments, the mechanism for selectively increasing and decreasing the volume of fluid in the expandable element can include a pressure regulator and flow valves, both of which are under electronic control (e.g., through the BMS 330A shown in FIG. 3A) The pressure regulator can be controlled to set and maintain a specific pressure of the fluid in the expandable element by using flow valves to control the flow of fluid into and out of the fluid-filled expandable element.

In some embodiments, the inner body 310C of the thermal interface 310E can be configured to include one or more high thermal conductivity structural materials operable to combine strength/durability with the ability to efficiently conduct heat. The strength/durability characteristics enable the inner body element 310C to securely hold the battery cell 320. Suitable high thermal conductivity structural materials include aluminum, aluminum alloys, copper, copper alloys, carbon, and carbon composites.

In some embodiments, the inner body 310C and the flexible interface 310D can be physically secured to one another through a thermal glue (not shown separately). Thermal glue is a type of adhesive designed to efficiently transfer heat between surfaces while bonding them together. Thermal glue contains materials with high thermal conductivity, such as ceramic particles, silver, or other conductive fillers, which allow heat to pass through efficiently. Thermal glue typically cures (hardens) over time, either at room temperature or through heat, thereby forming a durable bond. Thermal glue typically provides thermal conductivity from about 0.8 W/m·K to about 2.0 W/m·K.

In some embodiments, the inner body 310C is the portions of the battery cell holder 310A that is part of the thermal interface 310E, and the remaining portions of the battery cell holder 310A that are not part of the thermal interface 310E form the main body 310C. As previously noted herein, in some embodiments, the inner body 310C of the thermal interface 310E is formed from material(s) having thermal conductivity from about 0.8 to 2.0 W/m·K. In some embodiments, the main body 310B is formed from a material (e.g., silica aerogel having thermal conductivity from about 0.013 W/m·K to about 0.017 W/m·K) having durability and a relatively low thermal conductivity that substantially inhibits the transfer of heat into or away from fluid passing through the battery cell vacancies 310G.

As best shown in FIGS. 3D and 3E, in some embodiments, the size of the battery cell opening 310F as defined by the flexible interface 310D is less than the size of the battery cell 320. The size of the battery cell 320 is reflected by the battery cell radius R_{C} and/or the battery cell circumference C_{C} shown in FIG. 3D. The size of the battery cell opening 310F is reflected by the battery cell opening radius R_{CO} and the battery cell opening circumference C_{CO} shown in FIG. 3E. The thermal interface 310E provides a path for heat exchange between the fluid and the battery cell 320 positioned within a battery cell opening 310F. In some embodiments, the flexible interface 310D is configured and arranged to substantially define sidewall regions of the battery cell opening 310F. The flexible interface 310D includes a size and a material flexibility that are operable to adjust and contact an exterior surface of the battery cell 320 responsive to an insertion of the battery cell 320 within the battery cell opening 310F.

Although the inner body 310C depicted in the Figures is substantially rectangular, and although the battery cells 320 and the battery cell openings 310F depicted in the Figures are substantially cylindrical, embodiments apply to a variety of sizes and shapes of the inner body, 310C, the battery cells 320, and the battery cell openings 310F, including but not limited to prismatic-shapes, pouch-shapes, square-shapes, rectangular-shapes, and the like. In some embodiments, the inner body 310C can have substantially the same shape as the battery cells 320 and/or the battery cell openings 310F.

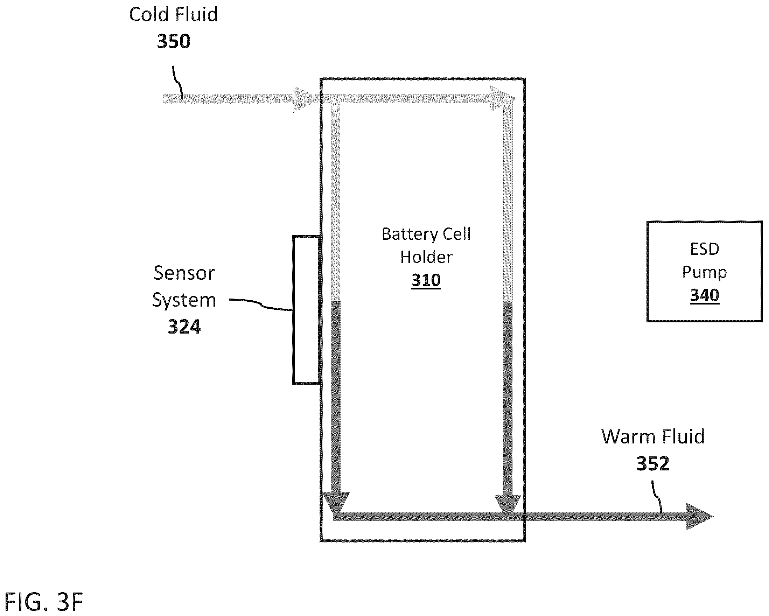

FIG. 3F depicts a simplified schematic diagram of the battery cell holder 310 illustrating a battery temperature reduction operation in accordance with embodiments. The battery cell holder 310 includes a fluid inlet (not shown separately from the battery cell holder 310) located near a top of the battery cell holder 310 and a fluid outlet (not shown separately from the battery cell holder 310) located near a bottom of the battery cell holder 310. In the battery cell temperature reduction operation, the inlet of the battery cell holder 310 is operable to allow a cooled version of the fluid (e.g., the cold fluid 350) to enter the battery cell holder 310 and pass or flow through the cell holder vacancies 310G (best shown in FIGS. 3C, 3D, and 3E) to contact the thermal interface 310E, thereby pulling heat from the battery cell 320, through the thermal interface 310E into the cooled version of the fluid to generate a warmed version of the fluid (e.g., the warm fluid 352). Because colder fluids have higher density than warmer fluids, the cooled version of the fluid begins to fall as it enters the cell holder vacancies 310G of the battery cell holder 310. The movement of the fluid through the cell holder vacancies 310G of the battery cell holder 310 is also influenced by the operations of the ESD pump 340 and the BMS 330 (shown in FIG. 3A).

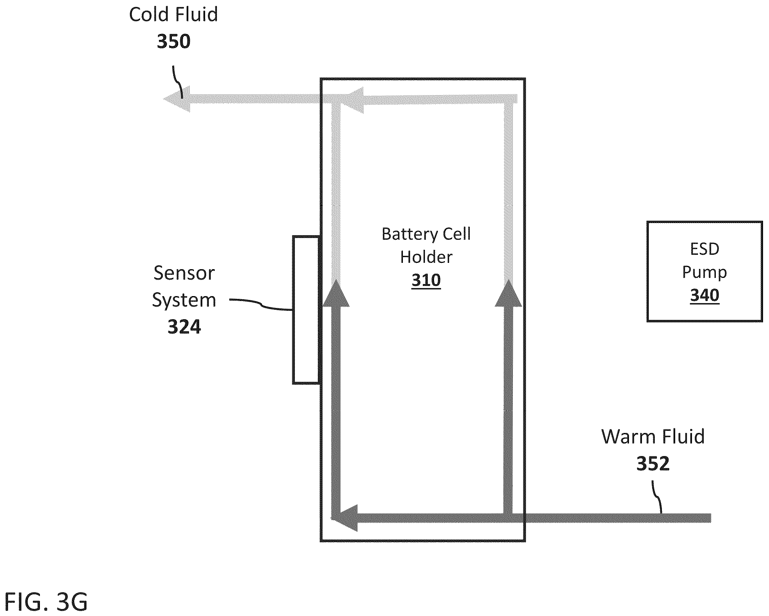

FIG. 3G depicts a simplified schematic diagram of the battery cell holder 310 illustrating a battery temperature increase operation in accordance with embodiments. In the battery cell temperature increase operation shown in FIG. 3G, the direction of the fluid flow is reversed from the battery cell temperature decrease operation shown in FIG. 3F. The inlet of the battery cell holder 310 is the opening near the bottom of the battery cell holder 310, and the outlet of the battery cell holder 310 is the opening near the top of the battery cell holder 310. The inlet is operable to allow a warm version of the fluid (e.g., the warm fluid 352) to enter the cell holder vacancies 310G (best shown in FIGS. 3C, 3D, and 3E) and pass or flow through the cell holder vacancies 310G (best shown in FIGS. 3C, 3D, and 3E) to contact the thermal interface 310E, thereby pulling cold from the battery cell 320 into the warmed version of the fluid to generate a cooled version of the fluid (e.g., the cold fluid 350). Because warmer fluids have a lower density than colder fluids, the warm version of the fluids begins to rise as it enters the cell holder vacancies 310G of the battery cell holder 310. The cooled version of the fluid (e.g., the cold fluid 350) leaves the cell holder vacancies 310G of the battery cell holder 310 though the outlet near the top of the battery cell holder 310. The movement of fluid through the cell holder vacancies 310G of the battery cell holder 310 is also influenced by the operations of the ESD pump 340 and the BMS 330 (shown in FIG. 3A).

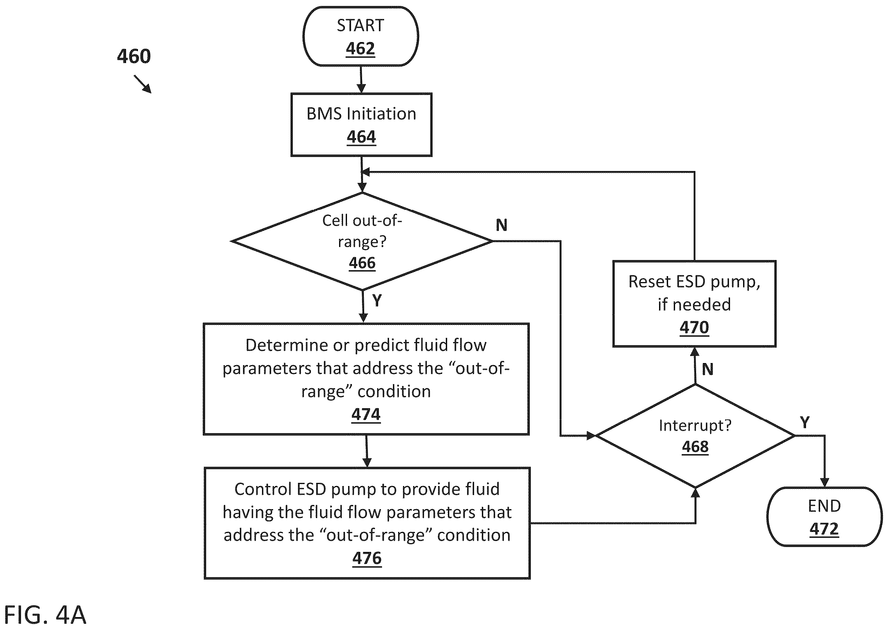

FIG. 4A depicts a flow diagram illustrating a non-limiting example of a method 460. The method 460 can be performed by the BMS 330 based at least in part on machine readable data or information from the sensor system 324. In some embodiments, aspects of the method 460 can also be performed by the controller 220 (shown in FIGS. 1 and 2) of the system 100 (shown in FIG. 1). The method 460 starts at block 462 and moves to block 464 where the BMS 330 is initiated. To initiate the BMS 330 means to start or prepare the BMS 330 for operation, configuring it to perform its intended functions within a system. This typically involves setting initial parameters, calibrating inputs, and ensuring communication with other components or systems is correctly established.

The method 460 moves to decision block 466 to evaluate whether or not a state and/or condition (i.e., status) of any one or more of the battery cells 320 (shown in FIG. 3A) is out-of-range. The "range" of the state and/or condition of the battery cell 320 includes condition values or state values that are not associated with performance degradation and/or safety issues of the battery cell 320. A state or condition that is "out-of-range" includes state values or condition values that are associated with performance degradation and/or safety issues of the battery cell 320. In some embodiments, the state or condition of the battery cell 320 is a temperature of the battery cell 320, and more specifically, a temperature of the battery call that is performing a battery operation such as charging or discharging; monitoring battery cell voltage; monitoring battery cell current; controlling battery cell overvoltage; controlling battery cell undervoltage; estimating battery cell SOC; and the like. For example, where the battery cell 320 is charging, there are battery cell temperatures that optimize the charging operations, and there are battery cell temperatures that degrade the charging operations. In this example, the state or condition of the battery cell 320 is the battery cell 320 charging and the temperature of the battery cell 320 while the battery cell 320 is discharging. There are battery cell temperatures at which battery cell discharge is "out of range," and there are battery cell temperatures at which battery cell discharge is "within range."

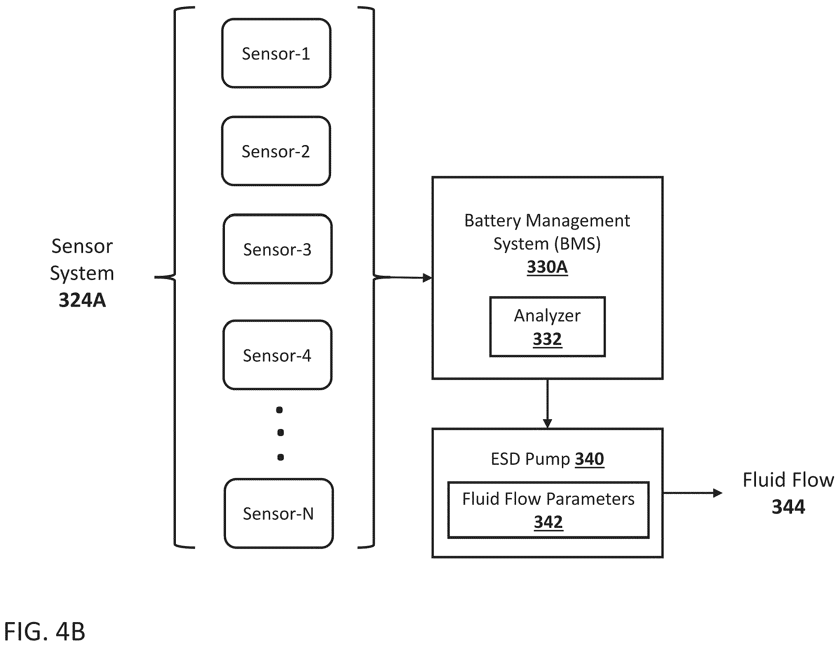

The evaluation at decision block 466 can be performed using the BMS 330 based on outputs received from the sensor system 324. A non-limiting example of a configuration for performing the evaluation at decision block 466 is depicted in FIG. 4B. In FIG. 4B, a non-limiting implementation of the sensor system 324 (shown in FIG. 3A) is the sensor system 324A; and a non-limiting implementation of the BMS 330 (shown in FIG. 3A) is the BMS 330A. The sensor system 324A can be implemented as a network of "N" sensors including Sensor-1 through Sensor-N, wherein N equals a whole number. Similar to the sensor system 324, the sensors of the sensor system 324A are distributed throughout the battery cell holder 310, as well as the system 100 (shown in FIG. 1), to detect specific physical phenomena throughout the battery cell holder 310 and the system 100 and convert the detected physical phenomenon into machine readable data or information, often for measurement or monitoring purposes. The machine-readable data or information is designed to be understood by machines, thereby enabling efficient data exchange, storage, analysis and interpretation by computers or automated components of the BMS 330A without requiring human intervention. Each sensor (Sensor-1 through Sensor-N) of the sensor system 324A generally includes a sensing element and a transducer. The sensing element is operable to detect the specific physical phenomenon (e.g., temperature, pressure, motion, flow rate, chemical composition, and the like) and generate therefrom an interim signal. The transducer is operable to convert the interim signal to the machine-readable data or information, which is machine-readable sensor output.

The machine-readable data or information can be raw machine-readable data or information that require signal processing to improve its quality or usability. Such signal processing can include amplification to boost the signal strength for better readability; filtering to remove noise or irrelevant frequencies from the signal; and linearization that adjusts the signal to ensure that it corresponds linearly to the measured phenomenon. The machine-readable sensor output can be transmitted to a control unit, microcontroller, or data acquisition system implemented as the BMS 330A, where it can be further processed, displayed, or used to trigger actions. In some instances, the above-described functionality of the transducer can be incorporated into the control unit, microcontroller, or data acquisition system. In some instances, the above-described functionality of the control unit, microcontroller, or data acquisition system can be incorporated within the sensor to form a "smart" sensor. The network of sensors (Sensor-1 through Sensor-N) that form the sensor system 324A can be distributed at suitable locations throughout the monitored regions of the battery cell holder 310 (shown in FIG. 3A) and/or the system 100 (shown in FIG. 1).

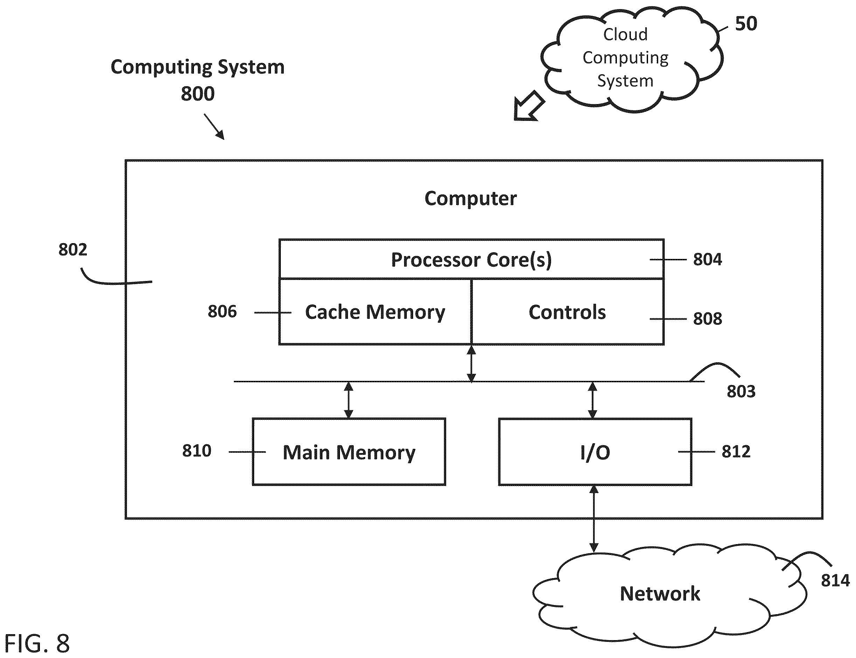

In some embodiments, the sensor system 324A includes sensors operable to detect a fluid leak in any one of the battery cell holders 310 (shown in FIG. 3A). The BMS 330, 330A is operable to include a monitoring system (not shown separately) operable to detect and respond to the detected fluid leak. In some embodiments, the sensors used to detect fluid leaks include a pressure sensor operable to detect the pressure of the fluid flowing through cell holder vacancies 310G of a given battery cell holder 310. The monitoring system is operable to identify changes in the internal pressure of fluid in the cell holder vacancies 310G over time that corresponds to or represents that the fluid is leaking from a particular battery cell holder 310. The response to the fluid leak can include the BMS 330, 330A interrupting the flow cooling/heating fluid from the fluid source 346 (shown in FIG. 3A) through the ESD pump 340 to the leaking battery cell holder 310 and issuing an alert to a maintenance system that identifies the leaking battery cell holder(s) 310 and requests a maintenance evaluation. In some embodiments, the maintenance system can include a server that is part of a cloud computing system (e.g., the cloud computing system 50 shown in FIG. 8).

The BMS 330A includes an analyzer 332 operable to evaluate the machine readable sensor outputs to determine whether or not a state and/or condition of the battery cells 320 is out-of-range. A state or condition of the battery cells 320 that is not out-of-range is considered to be within range. In some embodiments, the analyzer 332 can be implemented as a programmable computer or processor configured to implement an algorithm that evaluates the machine readable sensor outputs to determine whether or not a state or condition of the battery cells 320 is out-of-range. In some embodiments, this evaluation can be performed based on various thresholds associated with the state or condition. For example, if the state/condition is temperature, and Sensor-1 measures the state/condition of a first instance of the battery cell 320, the sensor output generated by Sensor-1 can be compared to a stored threshold to determine whether the temperature readings represented by the sensor output generated by Sensor-1 is out-of-range or within-range. In some embodiments, the functionality performed by the analyzer 332 can be located on remote server and accessed by the BMS 330A through a cloud computing system (e.g., the cloud computing system 50 shown in FIG. 8).

In some embodiments, the analyzer 332 can utilize a rule-based algorithm to determine whether or not a sensed state/condition is out-of-range. A rule-based algorithm is a type of algorithm that makes decisions or performs actions based on a predefined set of rules, conditions, or "if-then" statements. In rule-based systems, experts or developers manually create a structured set of instructions that govern the algorithm's behavior in various scenarios (e.g., various combinations of sensed state/condition of the battery cell 320 and other components of the battery cell holder 310 and the overall system 100). These rules are typically simple, deterministic, and tailored to address specific tasks or situations. For example, where a battery cell holder 310 includes five battery cells 320, and where it is sensed that states/conditions of two of the five battery cells 320 are out-of-range by two percent but states/conditions of three of the five battery cells 320 are not out-of-range, a set of predefined rules can be generated that allows the rule-based algorithm to determine whether the above-described state/condition qualifies as an out-of-range state/condition for the entire set of battery cells 320 in the battery cell holder 310.

In some embodiments, the analyzer 332 can utilize a cognitive algorithm to determine whether or not a sensed state/condition is out-of-range. A cognitive algorithm refers to a variety of algorithm types that generate and apply computerized models to simulate the human thought process in complex situations where the answers might be ambiguous and uncertain. A cognitive algorithm includes self-learning technologies that use data mining, pattern recognition, natural language processing (NLP), and other related technologies to generate the mathematical models that make decisions (e.g., classifications, predictions, and the like) that, in effect, mimic human intelligence. The modifier "cognitive" as applied to components and functions described herein refers components and functions that utilize cognitive algorithms to generate results associated with the component or function. Non-limiting examples of a cognitive algorithms include artificial intelligence (AI) algorithms, NLP algorithms, natural language understanding (NLU) algorithms, language models (LMs), and similarity algorithms.

The analyzer 332 of the BMS 330A is coupled to the ESD pump 340 to control the ESD pump 340 to generate a fluid flow 344 having fluid flow parameters 342. Additional details of the fluid flow parameters 344 are described in connection with the description of block 476 of the method 460.

Returning now to the method 460 shown in FIG. 4A, if the response to the inquiry at decision block 466 is no, the method 460 moves to decision block 468 to determine whether or not an interrupt request has been received. If the response to the inquiry at decision block 468 is yes, the method 460 moves to block 472 and ends. If the response to the inquiry at decision block 468 is no, the method 460 moves to block 470 and resets the ESD pump (e.g., ESD pump 340), if needed. The method 460 then returns to an input to decision block 466 to again evaluate whether or not a battery cell (e.g., battery cell 320) is out-of-range.

If the response to the inquiry at decision block 466 is yes, the method 460 moves to block 474 to determine or predict fluid flow parameters (e.g., fluid flow parameters 342) that address the "out-of-range" state/condition identified at decision block 468. The analyzer 332 (shown in FIG. 4B) and the BMS 330A can include cognitive algorithms operable to detect patterns in the state/condition of the battery cells 320 to predict the nature of the state/condition. For example, where the state/condition is temperature, the cognitive algorithms can evaluate patterns in the state/condition over time to predict that the relevant battery cells 320 are in the early stages of, for example, a thermal runaway. A cognitive algorithm refers to a variety of algorithm types that generate and apply computerized models to simulate the human thought process in complex situations where the answers might be ambiguous and uncertain. A cognitive algorithm includes self-learning technologies that use data mining, pattern recognition, NLP, and other related technologies to generate the mathematical models that make decisions (e.g., classifications, predictions, and the like) that, in effect, mimic human intelligence. Non-limiting examples of a cognitive algorithms include AI algorithms, NLP algorithms, NLU algorithms, and the like. In its simplest form, AI is a field that combines computer science and robust datasets to enable problem-solving. AI also encompasses sub-fields of machine learning and deep learning. Machine learning and deep learning are implemented as neural networks (NNs) having input layers, hidden layers and output layers. Machine learning NNs differ from deep learning NNs in that deep learning has more hidden layers than machine learning. AI systems can be implemented as AI algorithms that seek to create expert systems operable to make predictions or classifications based on input data.

The method 460 moves to block 476 where the analyzer 332 and the BMS 330A are further configured to generate a set of controls that are applied to the ESD pump 340 to pass or flow the fluid through cell holder vacancies 310G of the battery cell holder 310 with flow parameters (e.g., flow parameters 342 shown in FIG. 4B) that are matched to the battery cell state/condition to more efficiently and effectively counter, mitigate or otherwise negate the predicted state/condition. The method 460 moves to decision block 468 to determine whether or not an interrupt request has been received. If the response to the inquiry at decision block 468 is yes, the method 460 moves to block 472 and ends. If the response to the inquiry at decision block 468 is no, the method 460 moves to block 470 and resets the ESD pump (e.g., ESD pump 340), if needed. The method 460 then returns to an input to decision block 466 to again evaluate whether or not any battery cell (e.g., battery cell 320) is out-of-range.

FIG. 5 depicts a simplified block diagram illustrating a system 502 having ESD-based thermal management functionality in accordance with one or more embodiments. The system 502 includes an HVAC side (or region) 510 and a battery side 530 (or region). The battery side 530 is integrated with the HVAC side 510 at a common component, which, in the system 502, is a heat exchanger 532. The heat exchanger 532 is configured and arranged to process more than one type of circulating fluid. More specifically, the heat exchanger 532 is configured to process and circulate HVAC cooling/heating fluid through the HVAC side 510. The heat exchanger 532 is further configured to process and circulate cooling/heating fluid through the battery side 530. In embodiments, the HVAC cooling/heating circulated fluid through the HVAC side 510 is different from the cooling/heating fluid circulated through the battery side 530. In some embodiments, a first segment of the heat exchanger 532 and a first set of controllable valves (e.g., electronic expansion valves) are operable to generate and circulate HVAC cooling fluid through the HVAC side 510 where the HVAC side 510 is operating to cool a warm environment. The first segment of the heat exchanger 532 and the first set of controllable valves are further operable to generate and circulate HVAC heating fluid through the HVAC side 510 where the HVAC side 510 is operating to warm a cold environment. In some embodiments, a second segment of the heat exchanger 532 and a second set of controllable valves (e.g., electronic expansion valves) are operable to provide cooling fluid through the battery side 530 in warm ESD conditions (e.g., from about 30°C to about 60°C) and provide warm fluid through the battery side 530 in cold ESD conditions (e.g., from about -40°C to about 15°C).

For the HVAC side 510, selected components of the associated HVAC system (e.g., system 100 shown in FIG. 1) are represented collectively in FIG. 5 as an HVAC cooling/heating loop 512 coupled to a compressing tube 518. In conventional operation of the associated HVAC system, a suitable HVAC cooling/heating fluid is circulated between the HVAC cooling/heating loop 512 and the compressing tube 518. The compressing tube 518, which can be part of a compressor system, compresses the HVAC cooling/heating fluid (e.g., generated by an evaporator) to increase its pressure and temperature, thereby enabling the associated HVAC system to transfer cooling/heating effectively, thereby ensuring efficient cold/heat exchange between indoor and outdoor environments.

In operation, the HVAC cooling/heating loop 512 is a closed-loop system operable to transfer heat into or out of a space to maintain a target temperature. The HVAC cooling/heating loop 512 includes various components (not shown separately) that work together to either add heat to or remove heat from a controlled environment using air, water, or refrigerants as the circulating medium. The components that form the HVAC cooling/heating loop 512 can include a control system

(not shown separately), which includes, for example, thermostats, sensors, and controllers that regulate the cooling/heating process by selectively turning components on and off to maintain the desired temperature. Advanced control systems can adjust airflow, temperature, and timing to optimize efficiency. The HVAC cooling/heating loop 512, the compressing tube 518, and the heat exchanger 532 (or portions of the heat exchanger 532) form a primary cooling/heating loop 520 of the system 502.

The system 502 can be coupled to a primary pump 514 and a VFD 516 through, for example, one or more of the components that form the primary cooling/heating loop 520. In some embodiments, the primary pump 514 is coupled to or incorporated within the heat exchanger 532. The primary pump 514 is operable to circulate the HVAC cooling/heating fluid through the primary cooling/heating loop 520. In some embodiments, the primary pump 514 is configured to include filter functionality operable to filter contaminants from the HVAC cooling/heating fluid flowing through the primary pump 514. In general, a VFD is a device used to control the speed and torque of electric motors by adjusting the frequency and voltage supplied to the motor. In the system 502, the VFD 516 is used to optimize the cooling power demands on the system 502 by dynamically regulating the operation of selected components, such as fans, pumps, and compressors. By modulating the motor speed of the compressor (e.g., through the compressing tubes 518), the VFD adjusts the cooling output to match the system's current demand, thereby avoiding unnecessary overcooling or excess energy consumption. The VFD 516 can control the speed of fans used in the system 502 to circulate air either for heat exchange (condenser/evaporator) or for air distribution. The VFD 516 adjusts the fan speed based on cooling demand and conditions (e.g., temperature or airflow requirements). Fan speeds can be lowered during low demand to reduce power usage. The VFD 516 is operable to respond to variable demands (e.g., fluctuating heating or cooling needs) placed on the associated HVAC system (i.e., the system 100 shown in FIG. 1) in which the HVAC cooling/heating loop 512 is incorporated. The VFD 516 can respond to the variable demands by selectively adjusting a motor speed of the primary pump 514 in a manner that reduces or increases power consumption of the associated HVAC system when the load demand placed on the associated HVAC system is reduced or increased, respectively. The VFD 516 works with sensors (e.g., temperature, pressure, humidity) and controllers (e.g., thermostats, controllers, building management systems, and the like) to sense the cooling/heating power demands being placed on the system 502 and dynamically adjust speeds of the appropriate motor(s) (e.g., the motor of the primary pump 514) to meet the real-time cooling/heating demands. In the system 502, the source(s) of the real-time cooling/heating demands can include the primary cooling/heating loop 520 alone, the secondary cooling/heating loop 540 alone, and/or both the primary cooling/heating loop 520 and the secondary cooling/heating loop 540.

On the battery side 530, the heat exchanger 532 couples the cooling/heating fluid through a secondary pump 340A, which couples the cooling/heating fluid through a supply manifold 536 to an inlet (not shown separately) of the battery cell holder 310. The battery cell holder 310 is controlled by the BMS 330. The battery cell holder 310, the BMS 330 and the secondary pump 340A form an ESD system 240B. The ESD system 240B depicted in FIG. 5 functions substantially the same as the ESD system 240A depicted in FIG. 3A. The secondary pump 340A of the system 502 performs substantially the same functions as the ESD pump 340 (shown in FIG. 3A, 3F, 3G, and 4B), and the fluid source 346 is implemented in the system 502 as the heat exchanger 532. In some embodiments, the secondary pump 340A is configured to include filter functionality operable to filter contaminants from the cooling/heating fluid flowing through the secondary pump 340A.

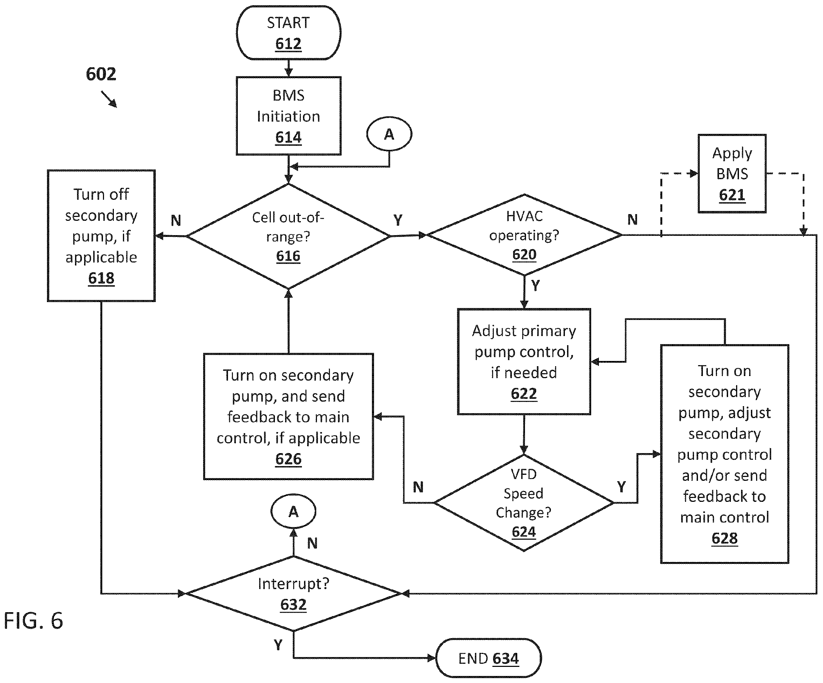

Due to its integration within the system 502 (e.g., via the heat exchanger 532), the secondary pump 340A is further controlled based at least in part on detecting whether or not the associated HVAC system (e.g., system 100 shown in FIG. 1) is on or off, and detecting whether or not a change has occurred in the load(s) placed on the system 502. In some embodiments, the change in load(s) placed on the system 502 can be detected by detecting changes in the pump motor speed applied by the VFD 516, which is part of the controls applied to the primary pump 514. Thus, controls applied to the primary pump 514 are adjusted based at least in part on operations performed by the secondary pump 340A to address out-of-range states/conditions of a battery cell (e.g., battery cell 320 shown in FIG. 3A). A non-limiting example of how the VFD 516 controls the primary pump 514 and the secondary pump 340A is illustrated by a method 602 (shown in FIG. 6). The method 602 is performed by the system 502 and is described in greater detail subsequently herein.

The system 502 can include more than one instance of the battery cell holder 310. The supply manifold 536 distributes the cooling/heating fluid from the secondary pump 340A (i.e., a single supply source) into multiple instances of the battery cell holder 310. The supply manifold 536 functions like a hub, taking the cooling/heating fluid from the secondary pump 340A and delivering it to the multiple instances of the battery cell holder 310.

Each instance of the battery cell holder 310 is operable to pass the cooling/heating fluid through cell holder vacancies 310G to an outlet port (not shown separately) of the battery cell holder 310 to a return manifold 538, which returns the cooling/heating fluid to the secondary pump 340A. The return manifold 538 collects the cooling/heating fluid from various locations, such as the multiple instances of the battery cell holder 310, and channels the cooling/heating fluid back to the secondary pump 340A. The secondary pump 340A returns the cooling/heating fluid received from the return manifold 538 to the heat exchanger 532. The heat exchanger 532, the secondary pump 340A, the supply manifold 536, the battery cell holder 310 and the return manifold 538 form a secondary cooling/heating loop 540 of the system 502. As shown in FIG. 5, the primary cooling/heating loop 520 is coupled to the secondary cooling/heating loop 540 at and through a common component, which, in the system 502, is the heat exchanger 532.

FIG. 6 depicts a flow diagram illustrating a non-limiting example of a method 602. The method 602 can be performed by the system 502 (shown in FIG. 5), including electronic control operations performed by the BMS 330, 330A (shown in FIGS. 3A and 4B) and/or the controller 220 (shown in FIGS. 1 and 2). The method 602 starts at block 612 and moves to block 614 where the BMS 330 is initiated. The operations performed at block 614 of the method 602 are substantially the same as the operations performed at block 464 (shown in FIG. 4A) of the method 460 (shown in FIG. 4A). The method 602 moves to decision block 616 to evaluate whether or not a state and/or condition of any one or more of the battery cells 320 is out-of-range. The operations performed at decision block 616 of the method 602 are substantially the same as the operations performed at decision block 466 (shown in FIG. 4A) of the method 460.

If the response to the inquiry at decision block 616 is no, the state and/or condition (state/condition) of the battery cells 320 (shown in FIG. 5) is not out-of-range (i.e., the cell-state is within-range), and the method 602 moves to block 618 to turn off the secondary pump 340A if the secondary pump 340A was activated in a previous iteration of the method 602. If the state/condition of the battery cells 320 is not out-of-range (i.e., the cell's state/condition is within-range), there is no need for the secondary pump 340A to be active. From block 618, the method 602 moves to decision block 632 to determine whether or not an interrupt request has been received. If the response to the inquiry at decision block 632 is yes, the method 602 moves to block 634 and ends. If the response to the inquiry at decision block 632 is no, the method 602 moves through connector A to an input to decision block 616 and again evaluates whether or not a state/condition of the battery cell 320 (shown in FIG. 5) is out-of-range.

If the response to the inquiry at decision block 616 is yes, a state/condition of a battery cell 320 (shown in FIG. 5) is out-of-range, and the method 602 moves to decision block 620 to determine whether not the associated HVAC system (e.g., system 100 shown in FIG. 1) is currently operating. HVAC systems do not generally operate constantly but instead cycle on and off to balance energy efficiency, system longevity, and occupant comfort. This on/off cycling is controlled by a thermostat (e.g., the thermostat 260 shown in FIG. 1) or another control mechanism, which activates and operates the HVAC system only when needed to maintain the desired temperature or conditions.

If the response to the inquiry at decision block 620 is no, the associated HVAC system is cycled off and not currently using the primary pump 514 to circulate HVAC cooling/heating fluid through the primary cooling/heating loop 520. Thus, the associated HVAC system operating in a cycled off mode draws considerably less power than when the associated HVAC system is operating in a cycled on mode. Accordingly, the power demands placed on the battery cells (e.g., battery cell 320 shown in FIG. 5) when the associated HVAC system is operating in a cycled off mode are considerably less than the power demands placed on the battery cells when the associated HVAC system is operating in a cycled on mode. With the associated HVAC system operating in a cycled off mode and experiencing a considerable reduction in its power consumption, it is expected that the out-of-range state/condition of one or more of the battery cells determined at decision block 616 will dissipate.

Under some circumstances associated with the system 502, the out-of-range status of one or more of the battery cells determined at decision block 616 may or may not stop immediately when the associated HVAC system is operating in a cycled off mode but will instead dissipate over time. In some embodiments, the method 602 can optionally branch to block 621 and apply the BMS to assist with dissipating the out-of-range state/condition of one or more of the battery cells determined at decision block 616. The operations at block 621 can be performed by the BMS 330, 330A (shown in FIGS. 3A and 4B) configured to determine that the dissipating out-of-range state/condition of the battery cells is sufficiently significant (e.g., over an intensity threshold and/or a time threshold) that the dissipating out-of-range state/condition of the battery cells should be addressed by the BMS 330, 330A. For example, where the out-of-range state/condition is an actual or predicted over-voltage state/condition, the functionality of the BMS 330, 330A used to address the dissipating out-of-range state/condition can include active balancing functionality and/or active discharge functionality. Active balancing functionality is a technique operable to equalize the charge levels of individual battery cells (e.g., battery cells 320 shown in FIG. 5) within the battery cell holder (e.g., battery cell holder 310 shown in FIG. 5) by redistributing energy among the battery cells, thereby ensuring that all of the battery cells maintain a similar state of charge (SOC), which enhances performance, extends battery life, and improves safety. Active discharge functionality is a controlled process of reducing the charge level of a battery cell or a group of battery cells by actively drawing energy from them. This mechanism, which is commonly used to prevent over-voltage conditions, equalizes the state of charge (SOC) among battery cells or safely discharge a set of battery cells for maintenance or storage. In some embodiments, the BMS 330, 330A can be configured to address the dissipating out-of-range state/condition of the battery cells when the associated HVAC system is operating in a cycled off mode by performing the operations at block 474 and 476 of the method 460 (shown in FIG. 4A).

With the response to the inquiry at decision block 620 being no, the method 602 moves either indirectly (through optional block 621) or directly to decision block 632 to determine whether or not an interrupt request has been received. If the response to the inquiry at decision block 632 is yes, the method 602 moves to block 634 and ends. If the response to the inquiry at decision block 632 is no, the method 602 moves through connector A to an input to decision block 616 and again evaluates whether or not a state/condition of the battery cell is out-of-range.

If the response to the inquiry at decision block 620 is yes, the associated HVAC system (e.g., the system 100 shown in FIG. 1) is operating in a cycle-on mode and is currently using the primary pump (e.g., primary pump 514 shown in FIG. 5) to circulate HVAC cooling/heating fluid through the primary cooling/heating loop 520 (shown in FIG. 5). Some or all of the power needs of the system 502 and the associated HVAC system operating in a cycle-on mode can be provided by ESDs (e.g., battery cells 320 shown in FIG. 5). Additionally, decision block 616 has previously determined that the state/condition of the battery cell (battery cell 320 shown in FIG. 5) is currently out-of-state.

The method 602 moves to block 622 to perform operations that adjust the speed of the primary pump of the associated HVAC system, as needed. The operations at block 622 can be performed by the primary pump (e.g., primary pump 514 shown in FIG. 5) working in tandem with a VFD (e.g., the VFD 516 shown in FIG. 5). The VFD is operable to respond to variable demands (e.g., fluctuating heating or cooling needs) placed on the system 502, including specifically variable demands placed on the system 502 by the primary cooling/heating loop 520 alone, the secondary cooling/heating loop 540 alone, and/or both the primary cooling/heating loop 520 and the secondary cooling/heating loop 540. The VFD is configured to respond to the variable demands in multiple ways, including by selectively adjusting a motor speed of the primary pump in a manner that reduces or increases power consumption of the components of the primary cooling/heating loop 520 when the load demand placed on the primary cooling/heating loop 520 is reduced or increased, respectively. The VFD changes motor speed of the primary pump by controlling the frequency and voltage supplied to the primary pump's motor, thereby adjusting the pump's speed and flow rate to match the current power consumption needs placed on the system 502 by the primary cooling/heating loop 520 alone, the secondary cooling/heating loop 540 alone, and/or both the primary cooling/heating loop 520 and the secondary cooling/heating loop 540. This allows the primary cooling/heating loop 520 to respond dynamically to varying load demands, thereby improving energy efficiency and operational flexibility.

The VFD (e.g., the VFD 516 shown in FIG. 5) is further configured to respond to the variable demands by controlling the secondary pump (e.g., the secondary pump 340A shown in FIG. 5) to address the battery cell state/condition that is out-of-range. Because the operations at decision block 616 determined that at least one battery cell (e.g., battery cell 320 shown in FIG. 5) is out-of-range, and because the operations at decision block 620 determined that the associated HVAC system (e.g., the system 100 shown in FIG. 1) is operating in a cycle-on mode, the variable demands (e.g., fluctuating heating or cooling needs) placed on the system 502 further include variable demands placed on the system 502 by an out-of-range state/condition in the secondary cooling/heating loop 540. Decision block 624 uses the existence of changes applied by the VFD to the motor speed of the primary pump (e.g., the primary pump 514 shown in FIG. 5) to control aspects of the secondary cooling/heating loop 540 (shown in FIG. 5).

If the response to the inquiry at decision block 624 is yes, the method 602 moves to block 628 and turns on the secondary pump (e.g., the secondary pump 340A shown in FIG. 5), adjusts controls applied to the secondary pump, and/or sends feedback to the main control (e.g., the controller 220 shown in FIGS. 1 and 2). The secondary pump is turned on only if it is not currently on from a previous iteration of the method 602. The adjusted controls are applied to the secondary pump if needed based on a comparison between the battery temperature conditioning requests (e.g., the fluid flow parameters 342 of the fluid flow 344 shown in FIG. 4B) applied to the secondary pump prior to the VFD speed change and the battery temperature conditioning requests that need to be applied based on the VFD speed change currently detected at decision block 624. The feedback sent to the main control includes the on/off status, flow rate, pump pressure, and other operating parameters of the secondary pump. From block 628, the method 602 returns to block 622 to perform another iteration of the operations at block 622 and decision block 624.

If the response to the inquiry at decision block 624 is no, the method 602 moves to block 626, turns on the secondary pump (e.g., the secondary pump 340A shown in FIG. 5), and/or sends feedback to the main control (e.g., the controller 220 shown in FIGS. 1 and 2). The secondary pump is turned on only if it is not currently on from a previous iteration of the method 602. The feedback sent to the main control includes informing the main control that the secondary cooling/heating loop 540 is active (to address the battery cell out-of-state condition identified at decision block 616), along with informing the main control that the primary cooling/heating loop 520 is active (i.e., responsive to the determination at decision block 620 that the associated HVAC system is in the on-mode). From block 626, the method 602 returns to decision block 616 to again evaluate whether or not a state/condition of battery cell (e.g., the battery cell 320 shown in FIG. 5) is out-of-range.

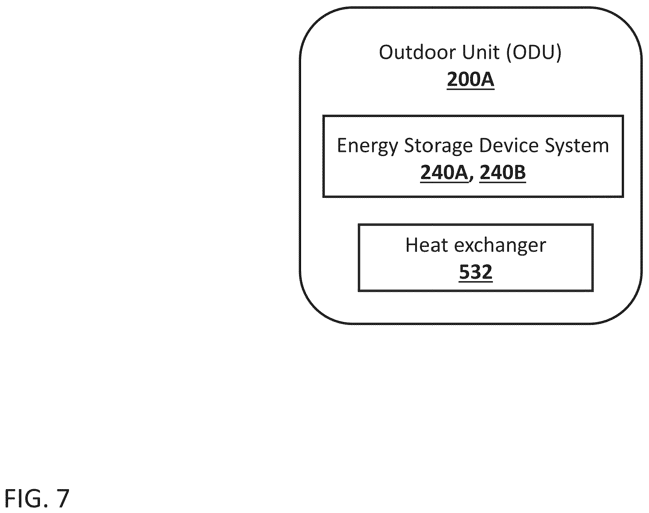

FIG. 7 depicts a non-limiting example of how the first unit 200 (shown in FIG. 1) of the system 100 (shown in FIG. 1) can be implemented as an outdoor unit (ODU) 200A operable to include an ESD system 240A, 240B (shown in FIGS. 3A and 5).having thermal management functionality in accordance with one or more embodiments. The ODU 200A can be further configured to include the heat exchanger 532 (shown in FIG. 5). The heat exchanger 532 is shared with the system 100 as described previously herein. In some embodiments, the heat exchanger 532 can be replaced with the fluid source 346 (shown in FIG. 3A) which is not shared with the system 100.

FIG. 8 illustrates an example of a computer system 800 that can be used to implement the computer-based components (e.g., the controller 220, the BMS 330, 330A, and the like). The computer system 800 includes an exemplary computing device ("computer") 802 configured to perform various aspects of the ESD control operations described herein. In addition to computer 802, the exemplary computer system 800 includes network 814, which connects computer 802 to additional systems (not depicted) and can include one or more wide area networks (WANs) and/or local area networks (LANs) such as the Internet, intranet(s), and/or wireless communication network(s). Computer 802 and additional system are in communication via network 814, e.g., to communicate data between them.

Exemplary computer 802 includes processor cores 804, main memory ("memory") 810, and input/output component(s) 812, which are in communication via bus 803. Processor cores 804 include cache memory ("cache") 806 and controls 808, which include branch prediction structures and associated search, hit, detect and update logic, which will be described in more detail below. Cache 806 can include multiple cache levels (not depicted) that are on or off-chip from processor 804. Memory 810 can include various data stored therein, e.g., instructions, software, routines, etc., which, e.g., can be transferred to/from cache 806 by controls 808 for execution by processor 804. Input/output component(s) 812 can include one or more components that facilitate local and/or remote input/output operations to/from computer 802, such as a display, keyboard, modem, network adapter, etc. (not depicted).

A cloud computing system 50 is in wired or wireless electronic communication with the computer system 800. The cloud computing system 50 can supplement, support or replace some or all of the functionality (in any combination) of the computer system 800. Additionally, some or all of the functionality of the computer system 800 can be implemented as a node of the cloud computing system 50.

For the sake of brevity, conventional techniques related to making and using aspects of the disclosure may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

Similarly, conventional techniques related to device fabrication operations may or may not be described in detail herein. Moreover, the various tasks and process steps described herein can be incorporated into a more comprehensive procedure or process having additional steps or functionality not described in detail herein. In particular, various steps in the manufacture of devices described herein are well known and so, in the interest of brevity, many conventional steps will only be mentioned briefly herein or will be omitted entirely without providing the well-known process details.

Some functional units of the systems described in this specification can be implemented as modules. Embodiments of the disclosure apply to a wide variety of module implementations. For example, a module can be implemented as a hardware circuit including custom very large scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. The functions performed by the various components/modules/models can be distributed differently than shown without departing from the scope of the invention, unless it is specifically stated otherwise.

Various embodiments are described herein with reference to the related drawings. Alternative embodiments can be derived without departing from the scope of invention. Various connections and positional relationships (e.g., over, below, adjacent, etc.) are set forth between elements in the following description and in the drawings. These connections and/or positional relationships, unless specified otherwise, can be direct or indirect, and the invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

In some embodiments, various functions or acts can take place at a given location and/or in connection with the operation of one or more apparatuses or systems. In some embodiments, a portion of a given function or act can be performed at a first device or location, and the remainder of the function or act can be performed at one or more additional devices or locations.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e., one, two, three, four, etc. The terms "a plurality" are understood to include any integer number greater than or equal to two, i.e., two, three, four, five, etc. The term "connection" can include both an indirect "connection" and a direct "connection."

The terms "about," "substantially," "approximately," and variations thereof, are intended to include the degree of error associated with measurement of the particular quantity based upon the equipment available at the time of filing the application. For example, "about" can include a range of ± 8% or 5%, or 2% of a given value. Additionally, the terms "about," "substantially," "approximately," and variations thereof, refer to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

Each computer, controller or other processor-based component identified herein can be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein can be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

Aspects of the invention can be embodied as a system, a method, and/or a computer program product at any possible technical detail level of integration. The computer program product can include a computer readable storage medium (or media) having computer readable program instructions thereon for causing a processor to carry out the processes described herein.

## Claims

1. An energy storage device, ESD, holder (310, 310A) comprising:
a main body (310B);
one or more ESD openings (310F) in the main body; and
one or more vacancy regions (310G) in the main body;
wherein each of the one or more vacancy regions is operable to hold a fluid; and
wherein a first ESD opening of the one or more ESD openings is operable to prevent the fluid from contacting an ESD (320) within the first ESD opening.

2. The ESD holder of claim 1, wherein the first ESD opening comprises a thermal interface (310E) that is operable to contact the fluid and/or operable to contact a surface of the ESD within the first ESD opening.

3. The ESD holder of claim 2, wherein the thermal interface is further operable to provide a pathway structure for heat exchange between the fluid and the ESD within the first ESD opening, optionally
wherein the heat exchange comprises passing heat to the fluid from the ESD within the first ESD opening, and/or passing heat from the fluid to the ESD within the first ESD opening.

4. The ESD holder of any of claims 1-3, wherein the thermal interface comprises a flexible region (310D) having a size operable to adjust and contact the surface of the ESD within the first ESD opening responsive to an insertion of the ESD within the first ESD opening.

5. The ESD holder of any one of claims 1-4, further comprising:
an inlet (312) operable to pass the fluid into the one or more vacancy regions in the main body, and/or
an outlet (314) operable to pass the fluid out of the one or more vacancy regions in the main body.

6. The ESD holder of claim 5, wherein:
the inlet port is coupled to an ESD pump (340);
the outlet port is coupled to the ESD pump;
the ESD pump controls the flow of the fluid into the one or more vacancy regions in the main body; and
the ESD pump controls the flow of the fluid out of the one or more vacancy regions in the main body.

7. A method of forming an energy storage device, ESD, holder (310, 310A), the method comprising:
forming a main body (310B);
forming one or more ESD openings (310F) in the main body; and
forming one or more vacancy regions (310G) in the main body;
wherein each of the one or more vacancy regions is operable to hold a fluid; and
wherein a first ESD opening of the one or more ESD openings is operable to prevent the fluid from contacting an ESD (320) within the first ESD opening.

8. The method of claim 7, wherein:
the first ESD opening comprises a thermal interface (310E) that is operable to contact the fluid;
the thermal interface is further operable to contact a surface of the ESD within the first ESD opening; and
the thermal interface is further operable to provide a pathway structure for heat exchange between the fluid and the ESD within the first ESD opening.

9. The method of any one of claims 7 and 8, wherein:
in a first operating mode of the ESD holder, the heat exchange comprises passing heat to the fluid from the ESD within the first ESD opening;
in a second operating mode of the ESD holder, the heat exchange comprises passing heat from the fluid to the ESD within the first ESD opening; and
the thermal interface comprises a flexible region (310D) having a size operable to adjust and contact the surface of the ESD within the first ESD opening responsive to an insertion of the ESD within the first ESD opening.

10. The method of any one of claims 7-9 further comprising:
forming an inlet (312) operable to pass the fluid into the one or more vacancy regions in the main body; and
forming an outlet (314) operable to pass the fluid out of the one or more vacancy regions in the main body,
optionally wherein:
the inlet port is coupled to an ESD pump (340);
the outlet port is coupled to the ESD pump;
the ESD pump controls the flow of the fluid into the one or more vacancy regions in the main body; and
the ESD pump controls the flow of the fluid out of the one or more vacancy regions in the main body.

11. An energy storage device, ESD, system (324), comprising:
an ESD holder (310, 310A) comprising a main body (310B), one or more ESD openings (310F) in the main body, one or more vacancy regions (310G) in the main body, an inlet port coupled to an ESD pump (340), and an outlet port coupled to the ESD pump;
wherein each of the one or more vacancy regions is operable to hold a fluid;
wherein a first ESD opening of the one or more ESD openings comprises a thermal interface that is operable to:
contact the fluid and a surface of an ESD (320) within the first ESD opening; and
provide a pathway structure for heat exchange between the fluid and the ESD within the first ESD opening;
wherein the ESD pump is operable to pass the fluid into, through, and out of the one or more vacancy regions in the main body; and
wherein an ESD management system, ESD-MS, is coupled to the ESD within the first ESD opening and operable to:
make a determination that a status of the ESD within the first ESD opening is out-of-range; and
responsive to the determination that the status of the ESD within the first ESD opening is out-of-range, control operations of the ESD pump.

12. The ESD system of claim 11, wherein:
the ESD pump is coupled to a source of the fluid (346);
the source of the fluid comprises a first set of valves operable to route cooling fluid operable to, while the source of the fluid is operating in a first mode, remove heat from the ESD within the first ESD opening;
the source of the fluid further comprises a second set of valves operable to route heating fluid operable to, while the source of the fluid is operating in a second mode, remove cold from the ESD within the first ESD opening;
the status comprises an ESD operation and an ESD temperature; and
controlling operations of the ESD pump comprises:
selecting fluid flow parameters of the fluid based at least in part on the ESD operation and the ESD temperature; and
applying the fluid flow parameters to the fluid.

13. The ESD system of any one of claims 11-12, wherein:
the ESD-MS comprise a rule-based algorithm; and
the rule-based algorithm is operable to select the fluid flow parameters of the fluid based at least in part on the ESD operation and the ESD temperature.

14. The ESD system of any one of claims 11-12, wherein:
the ESD-MS comprise a cognitive algorithm; and
the cognitive algorithm is operable to select the fluid flow parameters of the fluid based at least in part on the ESD operation and the ESD temperature.

15. The ESD system of any one of claims 11-14, further comprising:
a primary cooling-heating, cooling/heating, loop (520) operable to circulate cooling/heating refrigerant through the primary cooling/heating loop; and
a secondary cooling/heating loop (530) comprising the ESD holder;
wherein the secondary cooling/heating loop is operable to circulate the fluid through the secondary cooling/heating loop.
